# EUROPEAN PATENT APPLICATION

(11) **EP 4 401 025 A1**
(43) Date of publication of application: **17.07.2024**
(21) Application number: 24151304.3
(22) Date of filing: 11.01.2024
(51) Int. Cl.: G06Q 20/20, G06V 20/52, G07G 1/00, G07G 3/00

(54) **SYSTEM AND METHOD TO DETECT FRAUDULENT/SHOPLIFTING ACTIVITIES DURING SELF-CHECKOUT OPERATIONS**

(30) Priority: 12.01.2023 US 202318153908
(71) Applicant: Datalogic IP Tech S.r.l., 40012 Calderara di Reno (BO) (IT)
(72) Inventor: MUSIANI, Roberto, 40050 Monte San Pietro (BO) (IT); CARRAGGI, Angelo, 40069 Zola Predosa (BO) (IT); DE GIROLAMI, Maurizio, 40012 Calderara di Reno (BO) (IT); TUMMINELLO, Davide, 40132 Bologna (BO) (IT)
(74) Representative: Riccardi, Elisa

(57) **Abstract**

A retail store self-checkout station may be configured to support a number of different sensing features, including (i) status (e.g., empty, not empty, occluded) of a shopping cart or shopping basket, (ii) customer behavior (e.g., potentially shoplifting or committing fraud at the checkout station, and (iii) machine-readable indicia (e.g., barcode) reading error or fraud. If an occlusion of the shopping cart or shopping basket exists, an advanced shopping cart structure and content analyzer may identify that an item is still in the shopping cart or shopping basket via openings defined by a mesh wall thereof.

## Description

### BACKGROUND

### Self-Checkout Stations

Space is at premium in the supermarkets and other retailers, especially around the checkout aisle, where space is often sold by the inch. Stores have a lot more demand for space than is currently available, so saving space dedicated to (self)-checkout operations should result in additional gains due to (a) the possibility to have more self-checkout lines in a given area, and (b) additional space being available to be sold to manufacturers willing to pay for products to be positioned at the checkout stations since every customer needs to pass through the checkout stations.

To reduce space required by the self-checkout stations while maintaining/ensuring easy and flexible operations, it is necessary to minimize cart movements between a cart arriving at a self-checkout station, items being scanned, bill payment, items/bags placed back into the cart, and customer leaving the self-checkout station.

Common/traditional checkout stations usually rely on long lanes with distinct areas/regions set up for: (a) shopping cart arrival and the items scanning phase (input trail), and (b) the bagging area and the new filling of the cart with the items purchased (usually in a region after the scanner, output trail).

Typically, self-checkout stations/kiosks provide a setup or configuration based on separated unload and bagging areas, and, in general, are feasible only for small shopping baskets. For full shopping carts, much more space is needed and little support is given to the customer regarding cart placement and self-checkout scanning procedures. Furthermore, the self-checkout stations include (a) an anti-shoplift feature that is limited to a security scale, and (b) a display-based user interface (e.g., screen) that requires the customer to focus on the display for feedback purposes, thereby making the whole user experience/process not very user friendly. As a result, existing self-checkout processes are neither fraud proof nor user-friendly, which therefore typically requires intervention of specialized personnel. As such, more user-friendly, reliable, smaller, repositionable, and automated fraud-detection solutions of self-checkout stations are needed.

### Shopping Cart / Basket Items Identification Challenges

Historically, self-checkout systems have provided only limited abilities for performing automatic supervision of the self-checkout process - often relying on the presence of human operators to detect fraudulent behaviors and assist the customers during the self-checkout operations. However, recent technical advances have enabled players in the retail industry to promote increasingly advanced automatic systems to provide a seamless supermarket user experience by (i) reducing the burden of long queues at the self-checkout station, (ii) providing better usage of the supermarket space, and (iii) reducing shoplifting and fraudulent transactions. However, despite the recent technical advances, there is still a significant amount of shoplifting and fraud that occurs by shoppers at self-checkout stations. As such, there is a need to further advance technology to account for variability and unpredictability of real-world environments.

Fully automated self-checkout systems potentially provide several advantages for supermarkets and customers, such as reduced labor costs, optimized floor space, faster queues, and improved privacy. There has been several approaches in automating self-checkout systems since the early 1990s, such as self-checkout units (e.g., kiosks), self-scanning during shopping, radio frequency identification (RFID)-based stations, checkout-free systems through smartcards or Al filled supermarkets. One problem that exists is that with less human control, these self-checkout systems open the door to a variety of issues, such as marginal behavior (e.g. shoplifting), customer errors, and the need to provide a seamless user experience.

A couple of ways to provide for reduced fraud during self-checkout operations include (i) monitoring content in a shopping cart and/or basket to verify that all the items are correctly scanned and added to a shopping list and invoice, and (ii) confirming that the shopping cart and/or basket at the end of the self-checkout operations is empty. These two concepts are well-known by human checkout clerks, but automating these two techniques at a self-checkout station when visibility into a shopping cart and/or shopping basket is often obscured or occluded presents significant technical challenges.

It is often desirable to have the capability to manage unconstrained environments to make (i) the self-checkout operation easier for customers through a user-friendly, human-machine interaction, and (ii) the self-checkout stations more affordable for the supermarket. It is generally believed that a flexible, cost-effective, self-checkout system should (i) reduce the shopping cart positional constraints to promote user-friendly, human-machine interactions and optimize the space available, and (ii) enable the use of a single 2D-camera/system to monitor more than one station at a time. However, to reliably analyze the shopping cart content, a clear view of an inside of a basket of a cart, which can be challenging in certain environments, especially as customers are unpredictable as to how shopping carts and shopping baskets are positioned at self-checkout stations - even when clear instructions are given to the customers.

### Shoplifting and Shopper Fraud Challenges

The lack of a human cashier/operator at self-checkout stations opens the door to a variety of issues. Fraudulent behavior or shoplifting, such as by a shopper (i) not scanning some of the items by faking the scanning action, (ii) hiding the item barcode, and (iii) leaving items in the cart/basket, (iv) passing more than one item at a time while scanning only one item, and (v) replacing an original barcode of an item with a barcode of a less expensive item, present a significant problem for any configuration of self-checkout operations. Customer errors, such as scanning difficulties, forgotten items, etc., are also problems for self-checkout stations. Moreover, there is a need to provide a seamless user experience at self-checkout stations that is capable of handling the variability and unpredictability of real-world situations of shoppers using a self-checkout station. To provide secure and efficient solutions for self-checkout systems, a variety of technology innovations are needed to ensure the customer self-checkout process takes place in a correct/lawful and easy manner for both retailers and shoppers.

### BRIEF SUMMARY

To provide a reduced footprint, user-friendly, dynamically reconfiguration, and reliable/secure self-checkout user-experience, a self-checkout station with both increased flexibility of available space and self-checkout process guidance may be provided by (i) utilizing an overhead or top-down facing camera and smart signs or smart projector, which may also have a top-down orientation, with a system controller capable of providing visual and/or audible guidance to a shopper and (ii) monitoring for fraud. In an embodiment, the self-checkout station may additionally include an electronic display (e.g., screen) may also be utilized to provide feedback to the shopper. Optimizing available space usage may be provided by removing physical barriers and generating an interactive virtual lane for shoppers at the self-checkout station via the overhead camera and smart projector. Optimizing a self-checkout process by the self-checkout station may be provided by monitoring customers in the interactive virtual lane in guiding the customers during an entire self-checkout process, from a customer or shopper arriving at the self-checkout station to completing payment processing and to exiting the self-checkout station.

The interactive virtual lane may be formed by a system inclusive of at least a top-down facing camera and a smart projector that are operated simultaneously by a system controller. The smart projector may be utilized to (i) guide customers to place a cart in a correct location and orientation, and (ii) display warning messages to customers when errors or fraudulent behaviors are detected by the system. The top-down camera (and supporting image processing system that may be part of the system controller) may be configured to check that the customer places the shopping cart in the correct position and orientation (e.g., cart fully within the virtual lane) to allow easy analysis of items in the cart and to maximize space usage at the self-checkout station.

A self-checkout surveillance system (overhead camera with image processing system that processes images and/or video stream during a customer checkout process) allows for a very flexible approach that (i) provides a dynamically reconfigurable work area, (ii) guides and provides feedback to customers during an entire checkout process by dynamically projecting virtual signs or indicators, (iii) estimates cart orientation to interact with customers and make sure carts are aligned correctly in order to assist the surveillance system to have the best possible view to reliably check content in the carts. Based on a configuration of the self-checkout surveillance system in physical connection to a structure that forms a self-checkout station, the self-checkout station may easily be repositioned without having to modify store infrastructure or significantly reduce modification of the store infrastructure.

One embodiment of a retail store self-checkout area may include a scanner configured to enable a shopper to scan items being purchased. A bagging area may be positioned at the scanner. A top-down facing camera positioned and oriented to image a shopping cart or basket at the self-checkout area and to generate image signals of the shopping cart or basket. A projector may be configured to project dynamically alterable illumination signals onto a surface visible to the shopper when at the self-checkout area to provide visual guidance information to the shopper. The projector may be a smart projector, and may be configured to be a top-down facing projector to illuminate a floor at the self-checkout area.

One embodiment of a method of managing a retail store self-checkout area may include receiving image signals from a top-down facing camera. The image signals may be processed to determine whether the shopping cart or basket of the shopper is properly positioned and oriented at the self-checkout area. Responsive to determining that the shopping cart or basket is not properly positioned at the self-checkout area, a control signal may be communicated to the projector to change an illumination signal from a first illumination state to a second illumination state to notify the shopper at the self-checkout area to reposition or reorient the shopping cart or basket.

One embodiment of a method of managing a retail store self-checkout area may include providing a scanner configured to enable a shopper to scan items being purchased. A bagging area positioned at the scanner may be provided. A top-down facing camera may be positioned and oriented to image a shopping cart or basket at the self-checkout area and to generate image signals of the shopping cart or basket. A projector may be positioned and configured to project dynamically alterable illumination signals onto a surface visible to the shopper when at the self-checkout area to provide visual guidance information to the shopper.

### Shopping Cart/Basket - Automated Items Identification Solutions

To overcome the challenges of ensuring that items in shopping carts and baskets are properly accounted for and identified, a self-checkout system or station may include an advanced 3D structure and content analyzer that is used to determine that items are still contained in a shopping cart and/or shopping basket, even in the event of a partially obscured or occluded basket space of a shopping cart or shopping basket, and what items are being purchased. To provide for such advanced 3D structure and content analyzer functionality, an advanced image processing system may be configured to address occlusions of items contained in a basket of a shopping cart when a side wall of the shopping cart or shopper is occluding a space for items of the basket, especially if an orthogonal, overhead camera is not available, thereby reducing restrictions of cart placement and angle relative to the self-checkout station. Because shopping carts are often positioned at self-checkout stations in a manner that may be occluded depending on the orientation of a camera and shopping cart relative to a line-of-sight of the camera, advanced image processing may be utilized to determine whether items remain in a basket of a shopping cart despite a side wall, person, or object partially occluding one or more items in the shopping cart. Such advanced imaging processing may include the use of identifying items as small blobs via a mesh sidewall of the basket of the shopping cart, thereby enabling the self-checkout station to prevent mistakes and reduce fraud and shoplifting by not removing all items in a shopping cart or otherwise.

One embodiment of a retail store self-checkout station may include a scanner configured to enable a shopper to scan machine-readable indicia on items being purchased. A camera may be positioned and oriented (i) to capture images of an area in which a shopping cart or shopping basket at the self-checkout station is to be positioned by the shopper during self-checkout, and (ii) to generate image signals of a self-checkout area at the self-checkout station. A processor may be in communication with the camera and scanner, and be configured to process a captured image of the self-checkout area to determine a status classification including one of the following: (i) No Cart: a shopping cart or shopping basket is not in the self-checkout area, (ii) Empty: a shopping cart or shopping basket in the self-checkout area is empty, (iii) Not Empty: a shopping cart or shopping basket in the self-checkout area currently includes an item for purchase, and (iv) Occluded: an occlusion of a storage space of the shopping cart or shopping basket exists for the camera. In response to determining the status classification, communicate a notification indicative of the status classification to the shopper.

One embodiment of a process or method of managing a retail store self-checkout station may include capturing overhead images of a shopping cart or shopping basket at the self-checkout station. Image signals inclusive of the shopping cart or shopping basket from the captured images may be generated. A determination may be made by a processor in processing the image signals as to whether the shopping cart or basket is empty, not empty, or occluded. A status classification may be set by the processor in response to determining that the shopping cart or shopping basket is empty, not empty, or occluded. A notification indicative of the status classification may be communicated, by the processor, to the shopper and/or retail store personnel.

The notification may be an audible notification. The shopper may be prevented from completing the self-checkout if the cart is determined not to be empty or an occlusion exists for the camera. The occlusion may be identified by the processor as being a wall of a basket of the shopping cart or shopping basket, by the shopper, or otherwise from the viewpoint of the camera as identified in the captured overhead images. The overhead images may be non-orthogonal relative to a floor.

### Shoplifting and Shopper Fraud Solutions

To help limit or remove the possibilities of shoplifting and shopper fraud, a self-checkout process inference / supervisor module that is adapted to support sensor modules, such as (i) a basket / cart content analyzer module, (ii) customer behavior tracking / analyzer module, and (iii) barcode reading items analysis / scale module may be executed by the self-checkout station. These modules may use image processing to support artificial intelligence (Al) and machine learning (ML) techniques to determine if and when shoplifting or fraud occurs in a real-time manner, thereby reducing or eliminating at least certain shoplifting and fraud techniques.

One embodiment of monitoring for errors or misbehavior (e.g., fraud or shoplifting) may include a processor of a self-checkout station analyzing a sequence of captured images inclusive of the shopper while scanning items at the self-checkout station to identify an action indicative of an error or misbehavior by the shopper. Responsive to identifying an action indicative of an error or misbehavior, generate a signal to notify the shopper and/or personnel at the retail store that an identification of a potential error or misbehavior by the shopper has been made.

### BRIEF DESCRIPTION OF THE DRAWINGS

Illustrative embodiments of the present invention are described in detail below with reference to the attached drawing figures, which are incorporated by reference herein and wherein:
**FIG. 1** is an illustration of an illustrative conventional self-checkout station;
**FIG. 2** is an illustration of an illustrative self-checkout station alternatively configured with a smaller footprint and with a top-down camera and virtual lane illumination device or smart signs projector to project virtual lane marker(s) and self-checkout process guidance signals;
**FIGS. 3A** and **3B** are illustrations of an illustrative system controller and modules for monitoring and controlling a self-checkout process of a self-checkout station of a retailer;
**FIG. 4** is an illustration of illustrative scene in which an empty shopping cart may be imaged at an angle to model and train an imaging system to recognize and locate, segment, and estimate a shopping cart in the scene;
**FIG. 5** is an illustration of an illustrative scene in which a bagging area of a self-checkout area with a shopping cart positioned in parallel and within a virtual checkout lane bounded by projected illumination signals that form lines that define the virtual lane;
**FIG. 6** is an illustration of an illustrative scene captured by an overhead camera of a shopping basket to identify items within and/or exiting the basket and monitor accurate scanning and proper behavior of a shopper during a self-checkout process;
**FIG. 7** is a flow diagram of an illustrative process for using image processing in recognizing items and providing instruction signals to a shopper during a self-checkout process;
**FIGS. 8A-8E** are images of an illustrative set of scenes of a virtual lane at a self-checkout area along with different guidance or instruction signals produced by a top-down projector by changing colors or patterns of projected lines that define the virtual lane and/or displaying words and/or symbols at the virtual lane in accordance with a state machine;
**FIGS. 9A-9H** are images of an illustrative shopping cart positioned at different angles for training an imaging system to identify or recognize the shopping cart when positioned at a self-checkout area;
**FIG. 10** is an illustration of an illustrative self-checkout station configured with an overhead, non-orthogonal camera at a checkout station for imaging shopping carts and/or shopping baskets and having advanced image processing to perform obstructed basket inspections and shopper fraud/shoplifting analyses;
**FIGS. 11A-11C** are images of an illustrative scene in which a shopping cart is inclusive of an item positioned in a basket of the shopping cart oriented at different angles relative to a camera;
**FIG. 12** is an illustration of an illustrative system controller and sensing modules for monitoring and controlling a self-checkout process of a self-checkout station of a retailer inclusive of an illustrative module for performing an advanced 3D structure and content analyzer of a shopping cart and shopping basket;
**FIG. 13** is an illustration of an illustrative process for performing the functionality of the (i) shopping basket/cart content analyzer module and (ii) shopping basket/cart advanced 3D structure and content analyzer module of **FIG. 12****;**
**FIGS. 14A-14H** are a set of processed captured images of an illustrative shopping cart that is image processed by an image processing flow to analyze and graphically identify various features of a basket of the shopping cart and wall(s) of the basket that may occlude items in the basket of the shopping cart;
**FIGS. 15A-15D** are a set of processed images of an illustrative shopping cart that is image processed to identify occlusions of the shopping cart as a result of a shopper obstructing view of a camera of a portion of a basket of the shopping cart;
**FIG. 16** is an illustrative color model, in this case a hue, saturation, value (HSV) color curve, that may be used in performing an image processing process for identifying color and contour features of a shopping cart and/or shopping basket by, for example, converting the image into an HSV color space;
**FIGS. 17A-17K** are illustrative captured and processed images of a scene in processing a captured image of a shopping cart or shopping basket to generate a content status classification (e.g., "Empty," "Not Empty," etc.), such as may be produced in the illustrative content status classification process of **FIG. 18****;**
**FIG. 18** is an illustrative process for performing a shopping cart and/or shopping basket content status classification process using advanced image processing techniques;
**FIGS. 19A-19D** are an illustrative set of images showing a typical checkout sequence of a shopper performing a visual scan of an item (e.g., grocery item) using a checkout scanner at a self-checkout station;
**FIG. 20** is a flow diagram of an illustrative process for performing customer behavior tracking and analysis;
**FIG. 21** is an illustrative barcode reading items analysis process that includes three main processing modules that may be utilized to perform the functions of the barcode reading items analysis module of **FIG. 12** using input video streams (e.g., sequence of images) and/or still images;
**FIGS. 22A-22C** is a set of illustrative images from a scanner of an item in different orientations and states (e.g., bent, flat, deformed, etc.); and
**FIG. 23** is a block diagram of an illustrative abstracted self-checkout system and process for monitoring and controlling a self-checkout process of a self-checkout station.

### DETAILED DESCRIPTION OF THE DRAWINGS

Space is at a premium in supermarkets, especially at a checkout area. Self-checkout usability and reliability is highly desired by retailers. To further reduce space to enable more self-checkout stations to be positioned in a given area while maintaining flexible and reliable operations, there is a need to (i) minimize shopping cart movements between the cart arrival, items scanning, bill payment, items/bags placed back into the cart, and customer leaving the area, and (ii) improve the man-machine interface for self-checkout stations.

The principles described herein provide for providing a way to improve communications via a virtual user interface between the machine and the customer by (a) providing a dynamically reconfigurable self-checkout station, (b) providing sensing, scene interpretation, and feedback capabilities to guide the user/customer during an entire self-checkout process through dynamically projected virtual signs and/or illumination markers or lines that define a virtual lane at the self-checkout station, (c) providing a fraud proof or prevention system, and (d) estimating cart orientation to interact with the customer to ensure the cart is correctly positioned and aligned in order to assist a self-checkout system controller in having best possible view to reliably check the cart content.

In providing the above-features, a virtual self-checkout interface may be provided to (i) support and supervise space constrained self-checkout applications, (ii) provide a guided, seamless, user-friendly experience that at the same time supports a fraud proof or fraud prevention self-checkout system in performing customer transactions. The self-checkout station may include a number of components, including (i) a top-down facing camera (sensing device), (ii) a smart sign projector (actuator device), (iii) a processor as part of a system controller configured to interpret an image stream of the self-checkout station, and (iv) a state machine being executed by the processor and used (a) to track customers during a self-checkout process (e.g., cart arrival, guided correct placement, and verification support, items scanning, items bagging, customer payment, and cart departure), and (b) to provide visual feedback and/or guidance to shoppers during the self-checkout process.

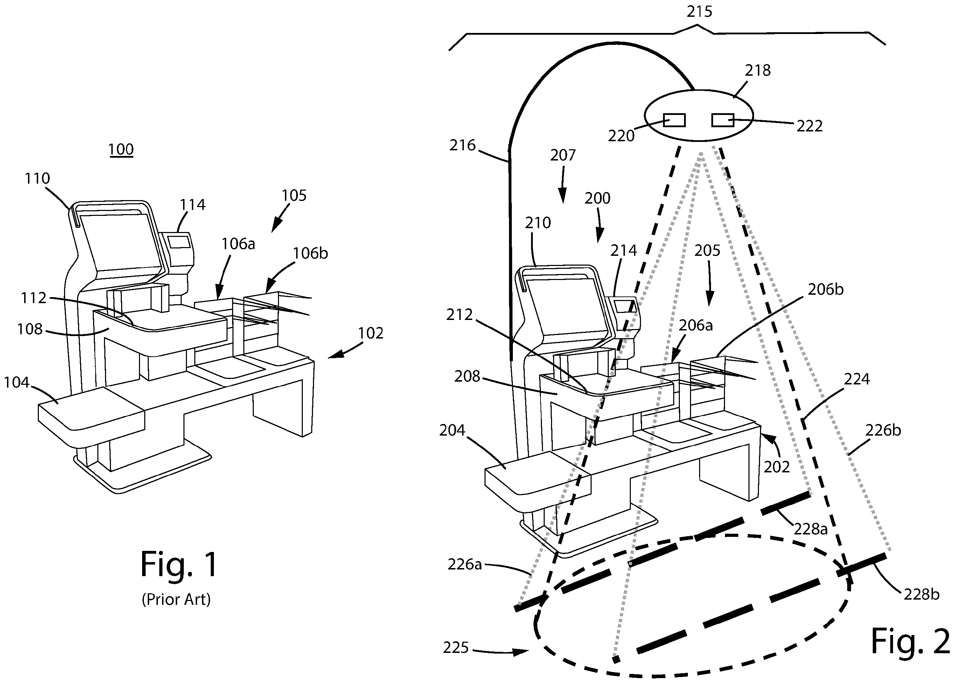

With regard to **FIG. 1****,** an illustration of an illustrative conventional self-checkout station **100** is shown. The self-checkout station **100** typically includes a self-checkout structure or counter **102** including a shopping basket support region **104,** bagging area **105** with a pair of bagging structures **106a** and **106b.** A scanning region **107** includes a scanning shelf **108** at which an electronic display **110,** which may be a touch screen display, imaging window(s) **112** facing toward a customer and/or upwards from the scanning shelf **108,** and payment device **114.** The payment device **114** typically includes a card reader, automatic cash receiver and processor, mobile device communicator, and/or any other device that supports collection of payment from a customer performing a self-checkout of goods at a retail store. This particular configuration of the self-checkout station **100** is relatively small compared with other conventional self-checkout stations. It should be understood that this self-checkout station **100** along with others generally have physical barriers in the form of walls, rails, etc., which takes up additional space that could otherwise be used for placement of valuable goods for sale, including ones that consumer product goods (CPGs) companies are willing to pay premium prices to be physically positioned at the point-of-sale (POS). In some cases, security cameras are fixedly positioned on the ceiling or on other physical structures and face the POS, but these security cameras are generally not usable for individual checkout transactions. The physical barriers, in whatever form, tend to be large and bulky. Moreover, the self-checkout station **100** along with physical barriers and fixed security cameras are generally in fixedly positions at the retail store so as to require reconstruction in order to move or rearrange the self-checkout stations **100.**

To optimize usage of available space at a retailer self-checkout area, a flexible, dynamically reconfigurable approach that makes it possible to reuse the same space/area for different operations at different times is needed and desirable. As such, it would be of great help to have a self-checkout station capable of simultaneously saving space, supporting security monitoring, and guiding or instructing customers during the self-checkout process, as described hereinbelow.

With regard to **FIG. 2****,** an illustration of an illustrative self-checkout station **200** that is dynamically reconfigurable and that is capable of having a smaller footprint without physical barriers due to supporting a virtual lane for shoppers is shown. The self-checkout station **200** may be configured with a top-down or overhead camera and smart sign projector to project virtual lane marker(s) to be parallel to a front wall of the self-checkout station **200** and self-checkout process notification signals. The self-checkout station **200** may include a self-checkout structure or counter **202,** a shopping basket support region **204,** a bagging area **205** with a pair of bagging structures **206a** and **206b.** A scanning region **207** may include a scanning shelf **208** at which an electronic display **210** (e.g., touch screen display), imaging window(s) **212** facing toward a customer and/or upwards from the scanning shelf **208,** and payment device **214** are located. The payment device **214** typically includes a card reader, automatic cash receiver and processor, mobile device communicator, and/or any other device that supports collection of payment from a customer performing a self-checkout of goods at a retail store.

The self-checkout station **200** may be part of a self-checkout area **215** inclusive of the station **200** and area immediately surrounding the self-checkout station **200.** The self-checkout area **215** may be defined to include a support structure **216,** in this case an arm that extends from the self-checkout station **200** and above the self-checkout station **200** and/or region in front of and aligned with the self-checkout station **200.** The support structure **216** may support a housing **218** configured to support top-down camera **220** and smart projector **222.** In an embodiment, electrical conductors (not shown) may extend through the support structure **216** to conduct electrical power and data (e.g., Power over Ethernet (PoE), USB cables, etc.) thereto. In an alternative embodiment, the electrical conductors may conduct only electrical signals and data signals may be communicated wirelessly. The smart projector **222** may alternatively be a projector that receives signals or images from a remote processor to be displayed.

The self-checkout area generally includes any area covered by a fields-of-view of the overhead camera and projector. Rather than the self-checkout station **200** including the support structure **216,** an alternative embodiment may include mounting the overhead camera **220** and smart projector **222** to any other configuration of support structure **216** supported by a structure of within the self-checkout area **215** so as to enable the camera **220** and projector **222** to provide the same function as shown and described herein. In an alternative embodiment, the support structure **216** may be positioned to a structure of the store. For example, overhead rails and or arms that are dynamically adjustable enable the housing **218** to be moved without having to perform structural changes, thereby making changes to the self-checkout area **215** dynamically repositionable with minimal effort and reconstruction.

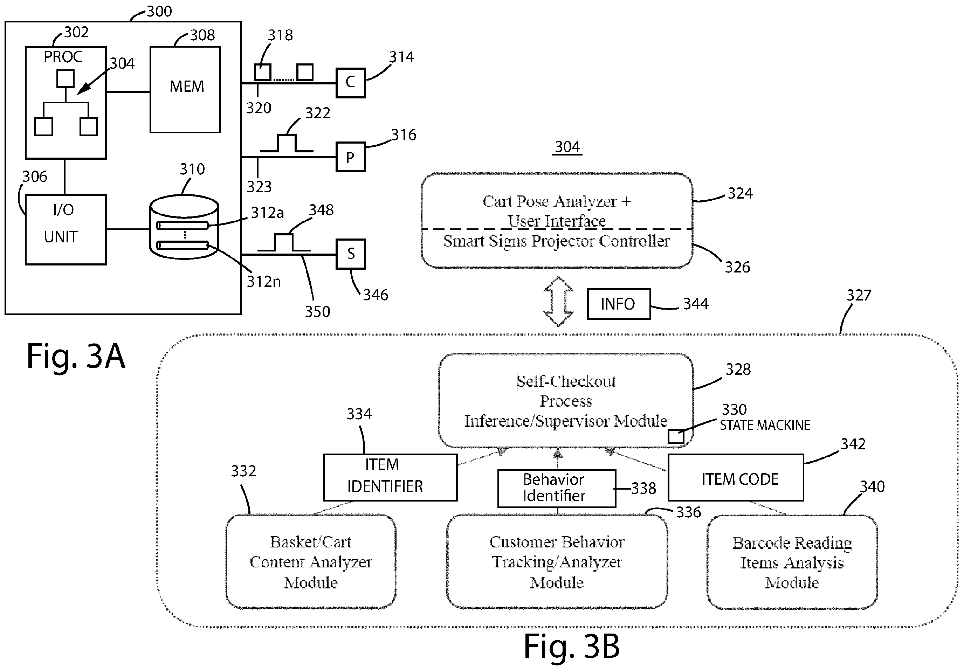

The self-checkout station **200** may be configured with a system controller, including a processor and other components, such as shown in **FIG. 3A****.** The system controller may be configured to control operation of the overhead camera **220** and smart projector **222,** and may be configured to monitor shoppers and provide guidance to shoppers during a self-checkout process while purchasing goods at the self-checkout area **215.** The overhead camera **220** may capture images (e.g., video) within a field-of-view **224** with a virtual lane **225** created by the smart projector **222** that is oriented as a top-down projector and outputs illumination signals **226a** and **226b** to create projected lines **228a** and **228b** on the floor. In an alternative embodiment, rather than projecting lights, controllable light strips that are temporarily positioned may be disposed on the floor that define the lane **225,** where the strips may include LEDs or other illumination devices, but are capable of being stepped or otherwise impacted without breaking. Control signals may be communicated to the light strips to control color or otherwise.

With regard to **FIGS. 3A** and **3B****,** an illustrative system controller **300** including a processor **302** that executes software **304** for monitoring and controlling a self-checkout process of a retailer is shown. The processor **302** may be in communication with an input/output (I/O) unit **306,** memory **308,** and storage unit **310,** such as a disk drive or other non-transitory medium. The I/O unit **306** may be configured to communicate data locally or remotely from the system controller **300.** The storage unit **310** may be configured to store a database inclusive of data records **312a-312n** (collectively **312),** such as product codes, product shapes and colors, shopping cart and shopping basket shapes and colors, etc. The controller **300** may be configured to perform processing for managing the self-checkout process for customers by communicating with an overhead camera **314** and smart projector **316** (e.g., smart signs projector). In communicating with the overhead camera **314,** the processor **302** may generate and communicate control signals (not shown) with the overhead camera **314** and receive images **318** using a data packet protocol or other communications protocol via a data communications channel **320** (e.g., wireline and/or wireless communications channel).

In communicating with the smart projector **316,** the processor **302** may generate control signals **322** and communicate the control signals **322** via communications channel **323** to cause the projector **316** to display information illumination signals for the shoppers based on a step in the checkout process (e.g., establish lines of virtual lane, scanning products, payment, payment acceptance, self-checkout complete notification) that each shopper performs, as further described herein. Communications of the video stream **318** and/or control signals **322** may be generated by the processor **302** or a signal generator (not shown) with which the processor **302** is in communication via the I/O unit **306.** The I/O unit **306** may further be configured to communicate over a local area network (LAN), wide area network (WAN), and/or any other communications network (e.g., Bluetooth^{®}) using any communications protocol for the respective networks, as understood in the art. The system controller **300** may be configured as part of the point-of-sale or may be independent thereof.

The software **304** may include a cart pose analyzer **324** and smart signs projector controller **326** used to create a user interface (e.g., illumination signals that create words, symbols, colors, etc. that guide a user during a self-checkout process). The cart pose analyzer **324** may be configured to identify that a shopping cart is positioned at the self-checkout area (e.g., in front of the self-checkout structure **202** of **FIG. 2****).** The cart pose analyzer **324** may use image processing and object identification technologies, such as a neural network or any other object identification tool or algorithm, to process images of a scene at the self-checkout area. The cart pose analyzer **324** may identify that a shopping cart is positioned at the self-checkout area, but further identify the orientation of the shopping cart. The cart pose analyzer **324** may further determine that the shopping cart is positioned in the correct location (e.g., in front of the self-checkout structure), but in an incorrect orientation (e.g., perpendicular or at a non-parallel angle with respect to the self-checkout structure) such that a portion of the shopping cart is outside one or more projected lines on a floor as illuminated by the smart projector **316** that defines a virtual lane at the self-checkout area.

More specifically, the cart pose analyzer **324** may be configured to analyze, verify, and guide the customer or shopper to place the shopping cart in the correct position and orientation into a "virtual parking area" at the self-checkout area. To guide the shopper, the system controller **300** is to be trained so that the system has "cognitive ability" to learn and "understand" the scene captured by the overhead camera **314,** thereby enabling the system (e.g., cart pose analyzer **324** and/or other modules) to locate, segment, and estimate a pose of a shopping cart in the scene during operation. To train the system controller **300,** an appropriate processing pipeline that, in receiving the video stream **318** from the top-down or overhead camera **314,** the system controller **300** is capable of estimating the cart pose, as follows:

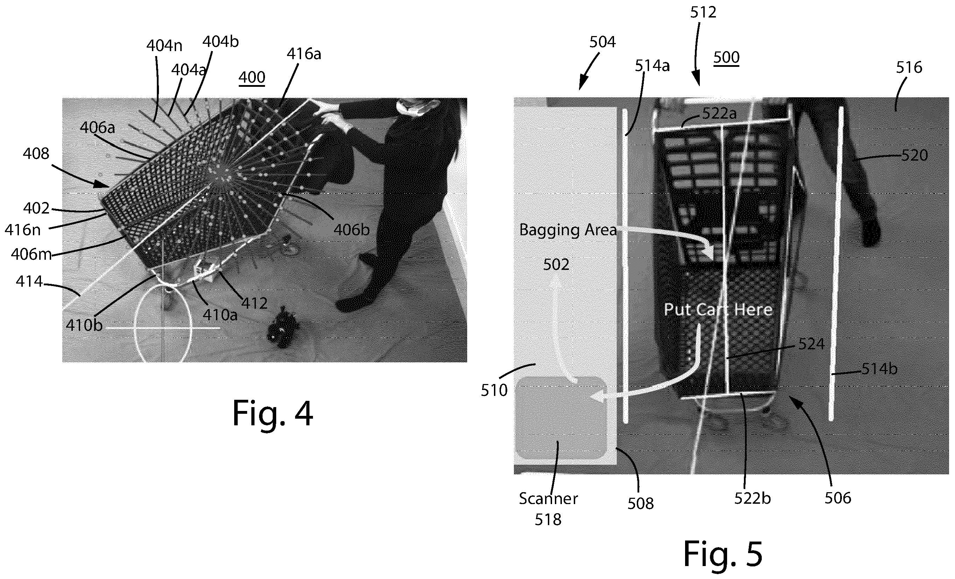

Shopping Cart Segmentation: to recognize a shopping cart or basket, a "color + contours model" segmentation approach may be utilized, which is based on a classical schema with two phases, training and runtime, as follows:
(i) Training Phase: a shopping cart "color + contours" reference model may be trained by presenting mages to the model in different orientations, thereby enabling the system controller to recognize a shopping cart when imaged by the overhead camera **314;**
(ii) Runtime Phase:
   (a) Identify probable shopping cart regions by applying a multidimensional thresholding segmentation approach;
   (b) Analyze the probable shopping cart regions using a connected components classification stage to validate the true positives and reject false positives;
   (c) Given the validated shopping cart regions (e.g., only one in the specific case shown in **FIG. 4****),** compute the region convex hull and, leveraging the knowledge that the back side of the shopping cart is generally wider than the front side, "searching by projecting" for a line passing through the convex hull barycenter or center of mass. The line cuts in half the convex hull and produces the smallest convex hull projection extent (NOTE: the max extent happens on the shopping cart diagonals); and
   (d) With further regard to **FIG. 4****,** given the approximate minimum extent projection orientation (e.g., a coarse to fine refinement stage may be used if necessary), a determination may be made of the main direction (back to front) of the shopping cart being perpendicular to the projection orientation.

The user interface smart signs projector controller **326** may be configured to control operation (e.g., light projection, color of light being projected, etc.) of the smart projector **316** as a function of a number of possible inputs, such as an input from the cart pose analyzer **324** indicating that a shopping cart is not oriented properly at the self-checkout area, that the customer made a mistake (e.g., forgot to bag an item), or that the customer's behavior is improper (e.g., did not scan a product prior to placing the product in a shopping bag).

As further shown in **FIG. 3B****,** a number of modules **327,** which may be hardware, software, or a combination thereof, that are in communication with the cart pose analyzer **324** and user interface smart signs projector controller **326.** A self-checkout process inference / supervisor module **328** may be configured with a state machine **330.** The state machine **330** may be embedded within the module **328** or be independent of the module **328** and communicate or share data signals and/or command signals therewith. In sharing the data signals and/or command signals, states of a self-checkout may be stored in shared memory, for example, in the memory **308** of **FIG. 3A****.** In an embodiment, the data signals and/or command signals may include alphanumeric data that may be communicated to the smart projector **316** by the projector controller **326** to cause the smart projector **316** to display preset patterns (e.g., lane lines, words, etc.), colors, etc. stored thereby.

In an embodiment, the smart projector **316** may store preset graphics and patterns (e.g., lane lines, words, etc.), colors, dynamic graphics (e.g., flashing, motion, etc.), and/or other preset graphics and patterns such that receipt of a control signal (e.g., "lane lines; green; solid," "lane lines; yellow; solid, "lane lines; red; solid," lane lines; red; flash;" "Put Cart Here; gray; solid," etc.), the smart projector **316** may access the stored control signal to cause the smart projector **316** to project the commanded illumination signal(s). It should be understood that alternative control signals in any format (e.g., any alphanumeric representation of a command) may be utilized. A set of control signals may be stored in the memory **308** and/or data records **312** along with identifications of a state of self-checkout of a shopper by the state machine **330** may cause the smart sign projector controller **326** to access the associated command and communicate the control signals **322** to cause the projector **316** to display the appropriate guidance information for the shopper.

The state machine **330** may be configured to track a self-checkout operations process, including identification of shopping cart or basket arrival, correct placement and verification of carts and baskets, items scanning, items bagging, customer payment, and customer departure. In the event that the shopper exits the self-checkout process prior to payment completion or performs steps out-of-order, the state machine **330** may be configured to generate notifications to the shopper and/or reset for a next customer based on a number of exception protocols. It should be understood that the state machine may be one or more modules and may be integrated with other functions of the software **304.**

The modules **327** may further include a basket / cart content analyzer module **332** configured to analyze and identify goods that are contained in baskets and carts as the shopper is performing the self-checkout process. For example, the basket / cart content analyzer module **322** may be configured to identify items based on size, shape, color, label, etc., of the items or portion of the items and generate an item identifier **334.** Additionally, if the content analyzer module **332** includes an estimator (e.g., Kalman filter, neural network, etc.), then the content analyzer module **332** may additional communicate an estimate certainty percentage (e.g., 87%) indicative that the content analyzer module **332** has correctly identified the object. The module **332** may utilize images collected by the camera **314** in the form of video or still images. In an embodiment, if the system controller **300** is in communication with a scale at the self-checkout station, then weight information may be utilized by the content analyzer module **332** for each item that is weighed by the scale by itself or added to the scale other items of known weight. The state machine **330** may receive the item identifier **334** and use the information to determine that the shopper is currently performing a self-checkout at the self-checkout area.

A customer behavior tracking / analyzer module **336** may be configured to monitor customer behavior at the self-checkout station. For example, the module **336** may track that an item is taken out of a shopping cart or basket and scanned prior to being placed into a bagging area. As another example, the module **336** may track that the shopper takes all of the items out of the cart or basket and places the items into the bagging area (or back onto the cart in the event that the items are too large to be bagged). It should be understood that there are a number of different customer behavior scenarios that may be monitored utilizing the configuration of the self-checkout station. The module **336** may also use images generated by the camera **314** in the form of video and/or still images to perform the behavior tracking and analyzing of a customer as he or she is performing a self-checkout. In an embodiment, error and fraud identifiers may be stored in the memory **308** and/or data records **312** such that if the module **336** identifies a known customer error or fraud behavior, the module **336** or state machine **330** may provide an identifier of the known customer error or fraud behavior, and such an identifier may be looked up in the memory **308** or data records **312** to look up an associated control signal. In response, the smart signs projector controller **326** may communicate the associated control signal **322** to the smart projector **316** to display the commanded illumination signals to display guidance information to the shopper.

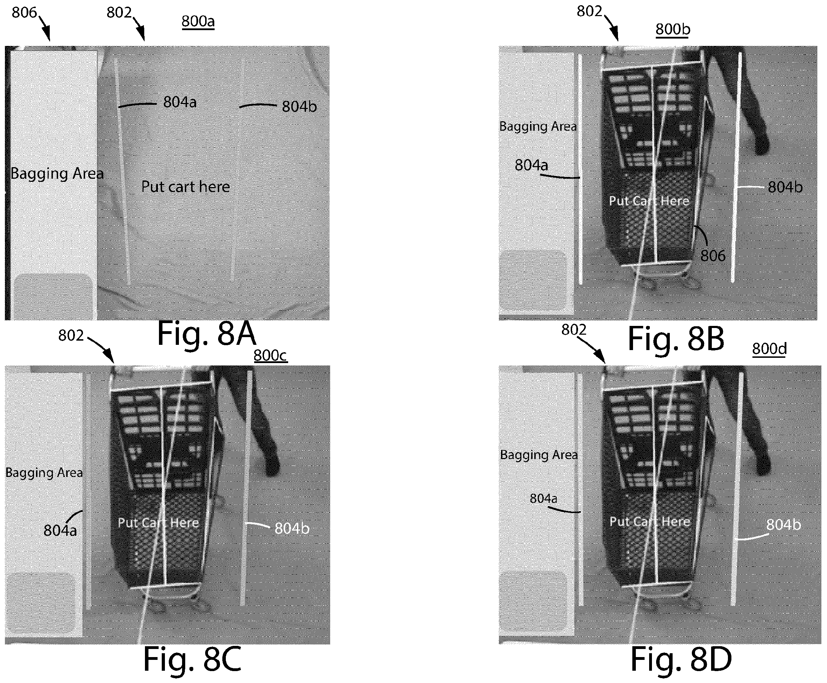

A behavior identifier **338** may be generated by the customer behavior tracking / analyzer module **336** and communicated to the self-checkout process inference / supervisor module **328** and/or state machine **330** to determine that the customer is still in a scanning process or state, payment process, or any other process for which the module is capable of monitoring. The behavior identifier **338** may be used by the module **328** and/or state machine **330** to determine (i) a current state in the self-checkout process that a customer is performing, and (ii) a notification that the customer either has proper or improper behavior. In the event that the customer is determined to have either proper or improper behavior, a signal may be generated and communicated to the user interface smart signs projector controller **326** to cause an illumination signal to be output by the projector **316** to have a particular output (e.g., shape, color, etc.). The module **328** and/or state machine **330** may simply respond to a behavior identifier representative of improper behavior and otherwise handle typical guidance based on determine state in performing the self-checkout. In an embodiment, the controller **326** may further be in communication with an audible controller (not shown) to cause a speaker (not shown) to output an audible signal (e.g., tone, frequency, spoken words) to notify the shopper of performing proper or improper behavior, for example. It should be understood that the controller **326** may be configured to support only a visual display (e.g., using a top-down smart projector), only an audible output (e.g., using a speaker at the self-checkout station to output audible words and/or sounds), or both visual and audible machine-human interfaces. In yet another embodiment, an electronic display and audible output may be utilized to support the self-checkout station with the top-down camera. With any of the configurations of the self-checkout station, the modules (e.g., module **328** and/or state machine **330)** may operate in real-time such that the notifications smart signs projector controller **326** communicates notifications are dynamic to provide feedback, instructions, or other notifications to the shoppers in real-time. An illustrative process of the state machine **330** is provided with regard to **FIGS. 8A-8E** hereinbelow.

A barcode reading items analysis module **340** may be configured to image and decode a machine-readable identifier (e.g., barcode, quick reference (QR) code, etc.) that is on items being purchased by a shopper. The module **340** may further be configured to read words on labels, capture data on a near field communication (NFC) tag, or capture machine-readable indicia of an item using any other protocol. The module may generate an item code **342** and communicate the code **342** to the module **328** and/or state machine **330** for processing thereby. The module **328** and/or state machine **330** may, in response, communicate checkout information **344** to the controller **326** so as to control information being dynamically communicated to the shopper in real-time via illumination signals from the projector **316** (and/or audible signals via a speaker) during the self-checkout process. The checkout information **344** may further be used by the controller **326** to display checkout status information to the shopper on a conventional display or any other technique. A speaker **346** may be in electrical communication with the system controller **300** and be configured to generate audible output in response to receiving audible signals **348** via a communications channel **350.** In an embodiment, the speaker **346** may be a smart speaker and be configured with stored audible information to play in response to receiving a command (as opposed to audible signals **348).** The audible signals **348** may be conventional audible signals that are stored in the data records **312** as wave files or other format and may be digital or analog.

With regard to **FIG. 4****,** an illustration of illustrative scene **400** in which an empty shopping cart **402** may be imaged at an angle to train an imaging system to recognize and locate, segment, and estimate a shopping cart in the scene **400.** The projection operation basic schema is shown, where lines **404a-404n** (collectively **404)** highlight projection directions made by the system (e.g., cart pose analyzer **324** of **FIG. 3B****)** while searching for the main direction/orientation of the shopping cart **402.** Lines **406a-406m** (collectively **406)** may be placed on edges of a basket **408** of the shopping cart **402.** Lines **410a** and **410b** (collectively **410)** may be placed on structures that form a base **412** of the shopping cart **402.** As previously described, a line **414** may extend through a center of mass point defined by the shopping cart **402** (or other geometric point relative to the structure of the shopping crat **402).** Points **416a-416n** (collectively **416)** may be positioned on the lines **406** and used by the cart pose analyzer **324.** The lines **404, 406,** and **410** may be used to create a model of segments of the shopping cart **402.** Alternative modeling techniques may be utilized to model the shape and/or orientation of the shopping cart **402.**

With regard to **FIG. 5****,** an illustration of an illustrative scene **500** in which a bagging area **502** of a self-checkout area **504** with a shopping cart **506** positioned in parallel with a front edge **508** of a structure **510** and within a virtual checkout lane **512** bounded by projected illumination signals that form lines **514a** and **514b** (collectively **514)** projected onto a floor **516** is shown. A scanning system or scanner **518** is positioned on the structure **510** for a shopper **520** to use in performing a self-checkout. The scanner **518** is configured to scan machine-readable indicia on items being purchased to automatically determine identity of the items, as understood in the art. The trained system controller may identify various rear and front features of the shopping cart **506** and create lines **522a** and **522b** (collectively **522),** for example, to create a perpendicular line **524** that extends longitudinally through the cart **506** to determine orientation. As represented, the lines **522** and **524** are computer model lines and not illuminations on the physical cart. The system controller may be configured to identify the position and orientation of the cart **506** to ensure that the cart **506** remains within the virtual checkout lane **512.** It should be understood that alternative modeling and orientation techniques may be utilized.

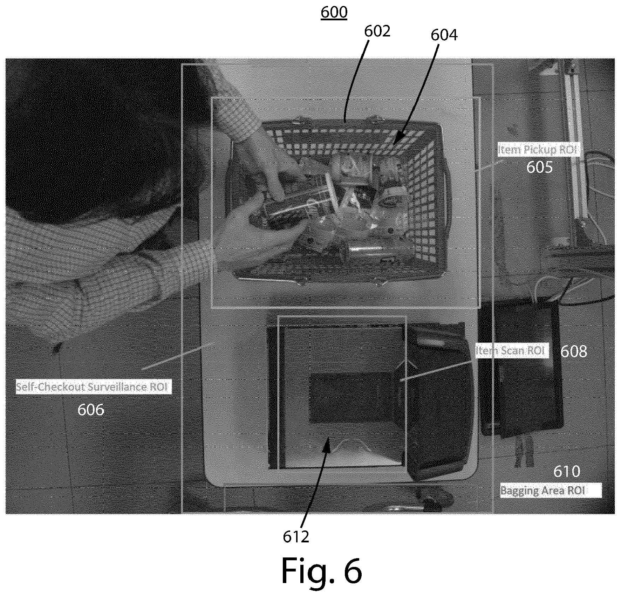

With regard to **FIG. 6****,** an illustration of an illustrative scene **600** captured by an overhead camera of a shopping basket **602** to identify items **604** within the basket **602** and monitor accurate scanning and proper behavior of a shopper during a self-checkout process is shown. Within the scene **600,** the basket **602** is positioned in an item pickup region-of-interest (ROI) **605** from the prospective of the overhead camera, where a customer places the basket **602** during the self-checkout process. The camera is used to capture images of the basket **602** and items **604.** A self-checkout surveillance region-of-interest **606** is shown. Also shown are an item scan region-of-interest **608** and bagging area region-of-interest **610** at a bagging area. Each of the regions-of-interest are considered to be segments of the image (e.g., still or video) produced the overhead camera. As understood in the art, a customer removes the items **604** from the basket **602** to be scanned by a scanner **612** within the item scan ROI **608** prior to placing the items **604** into bags in the bagging area.

More specifically, and with further regard to **FIGS. 3A** and **3B****,** the self-checkout process inference/supervisor module **328** may function as a self-checkout process virtual lane supervisor module to manage the self-checkout process of a shopper in purchasing items via a self-checkout station. In an embodiment, the entire self-checkout process is based on a basic set of repetitive customer operations and/or actions divided in two main phases:

At Phase 1: A customer enters the self-checkout area and scans all the items inside the shopping cart or basket. As part of the process, the shopper positions the shopping cart in the proposed location (i.e., in front of a scanner region) with the correct orientation (e.g., parallel to a counter). The customer may stand in front of the cart near the scanner and start the items scanning process by picking up one item at a time, scan the item barcode or machine-readable indicia, and place the item in the bagging area.

At Phase 2: After all the items previously in the shopping cart have been scanned and added to a shopping list at a point-of-sale, the shopper pays for the items on the shopping list and leaves the store. Before leaving the store, the shopper puts the shopping bags into the shopping cart and exits the area. These actions can be well modeled and incorporated into the state machine **330** of **FIG. 3B****.** The state machine **330** may be in communication with (i) a sensing and inference engine that is configured to analyze a top-down camera video stream to determine what is happening in the scene, and (ii) a smart projector configured to provide adequate feedback to the customer when positioned at the self-checkout scanning area, as shown in **FIG. 5****.**

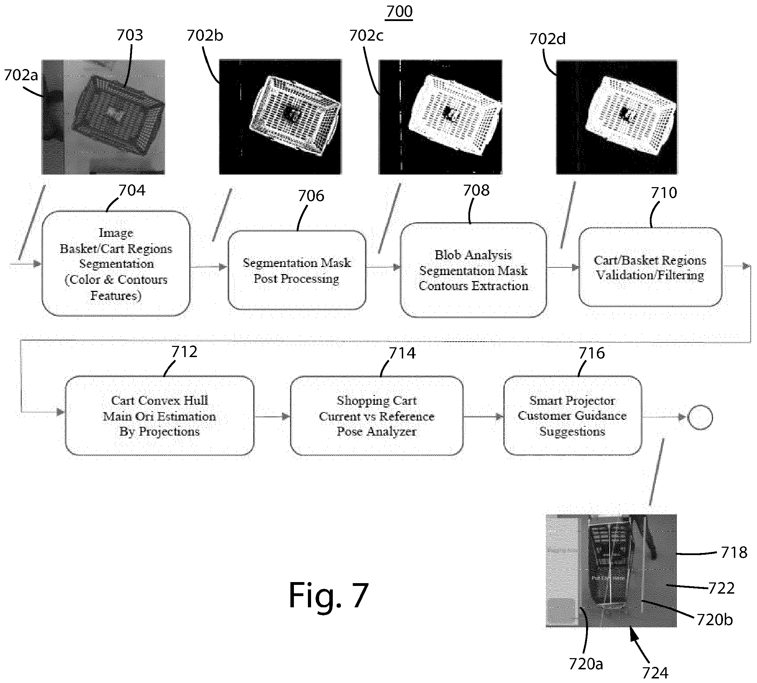

With regard to **FIG. 7****,** a flow diagram of an illustrative self-checkout imaging and guidance process **700** for using image processing in recognizing items in supporting the self-checkout process inference/supervisor module **328** of **FIG. 3B** and providing instruction signals to a shopper during a self-checkout process is shown. Images **702a-702d** (collectively **702)** are images generated at different stages of an image processing process that may be performed by the system controller **300** of **FIG. 3A** executing the software **304** of **FIG. 3B****.** The smart-checkout imaging and guidance process **700** may be performed by imaging both shopping baskets and shopping carts, and may start by receiving image **702a** of a shopping basket **703** placed at a self-checkout area generated by an overhead camera, as previously described. The image **702a** may be processed at step **704,** where an image basket/cart regions segmentation may be performed by identifying color and contours features. The color and contours features may be processed to isolate the basket and items (not shown) contained therein. Other algorithms and imaging techniques may be utilized to identify the shopping basket, cart, and items being purchased. Resulting from step **704** is the image **702b** that is then processed at step **706** by performing a segmentation mask post processing operation. Image **702c** results from step **706** and a blob analysis segmentation mask contours extraction process is performed at step **708.** Image **702d** results from step **708** and a cart/basket regions validation/filtering process is performed at step **710.**

The process **700** may further be configured to assist in providing guidance to customers with shopping carts with items at the self-checkout station. At step **712,** a cart convex hull main orientation estimation using projections may be performed so as to determine orientation of a shopping cart at the self-checkout area. At step **714,** a shopping cart current versus reference pose analyzer may be performed to determine position and orientation of the shopping cart imaged by the overhead camera. If orientation of the shopping cart is unacceptable (e.g., outside lines of the virtual lane), then at step **716,** a smart projector customer guidance suggestions process may be performed. In performing the customer guidance suggestions, a smart projector at the self-checkout area, as shown in scene **718,** may be configured to project illumination signals to form and/or change color, shape, or otherwise of lines **720a** and **720b** (collectively **720)** and/or display other guidance information (e.g., words and symbols) on a floor **722** at the self-checkout area at a virtual lane **724.** The smart projector customer guidance suggestions performed at step **716** may use the software **304** of **FIG. 3B** to assist shoppers in performing self-checkout to purchase items contained in shopping baskets and shopping carts. As previously described, and further described with regard to **FIGS. 8A-****8E** hereinbelow, the smart projector may be configured to provide guidance by dynamically changing color of the lines or perform any other display feature as a function of state of the customer in a self-checkout process.

With regard to **FIGS. 8A-8E****,** images of an illustrative set of scenes **800a-800e** (collectively **800)** of a virtual lane **802** defined by projected lines **804a** and **804b** (collectively **804)** produced by a smart projector configured as a top-down projector at a self-checkout area **806** along with different guidance or instruction signals produced by the smart projector by optionally changing colors or patterns of the projected lines **804** in accordance with a state machine are shown. In scene **800a,** the virtual lane **802** bounded by the projected lines **804** defines where a shopping cart **806,** as shown in **FIGS. 8B-8E****,** is shown. The projected lines **804** may be used by a cart orientation estimate algorithm to assist a shopper in maintaining the shopping cart **806** within the virtual lane **802.** In an embodiment, a cart orientation estimation module, such as module **322** of **FIG. 3B****,** may be integrated in the system to control and support the correct placement of the shopping cart into the virtual lane. The module/algorithm **322** may be configured to perform the following steps (i) cart (color + contours) segmentation (step **704** of **FIG. 7****),** (ii) contours detection + filtering (steps **706-710),** and convex hull analysis (projection of the cart along many different directions) (step **712;** see also **FIG. 4****).** To provide an easier and safer point-of-view, the system may guide the customer to orient the cart at a preferred angle (de facto forming a virtual lane) that reduces blockage of self-checkout passages as much as possible, such as when a shopping cart is oriented at a 90 degree or 270 degree angle relative to a counter of the self-checkout area **806,** and/or to employ a customized process to analyze shopping cart content based on the detected point-of-view.

Supported with sensing, inference, and signaling capabilities, the self-checkout supervisor module may guide and supervise the customer along the whole self-checkout process while monitoring for errors or fraud actions. The self-checkout process may be accomplished through use of a state machine, such as state machine **330** of **FIG. 3****,** that makes it possible to reuse the same cart parking region for both the process of emptying of the cart of items to be added to a shopping bill and the subsequent filling of the emptied cart or basket with the items purchased in shopping bags or otherwise.

The state machine **330** of **FIG. 3B** may be used in providing information to a shopper during a self-checkout process in purchasing items at a retail store using a self-checkout station, as shown in **FIG. 8A-8E****.** The state machine **330** may include a number of states and information provided to the shopper may be displayed away from an electronic screen by using a smart projector positioned over the virtual lane **802,** where the smart projector may be configured to project words, symbols, lane lines, different colors and/or other illumination techniques (e.g., flash, sequence, etc.) that is visible to the shopper. In an embodiment, audible information may be communicated to the shopper. The state machine provides a shopper with information indicative of a current state and/or transition between states as the shopper perform a self-checkout in purchasing items. An illustrative state machine may include the following states:

**State 1** (e.g., gray lights): the self-checkout system is waiting for a new customer to enter the self-checkout region (e.g., projecting "Put Cart Here" information on the floor next to the self-checkout station and optionally within the virtual lane **802).** State 1 may be seen in **FIG. 8A****.**

**State 2** (e.g., yellow lights): the customer places the cart full of items into a virtual lane defined by projected lines on the floor, and then the lights of the lane lines may turn orange. In an embodiment, State 2 may require or recognize that the shopper places himself or herself in front of the cart or in a location that does not obscure the items within the cart from the overhead camera, and when the user is in front of the cart, the lights turn the lane lines orange or flash the lane lines for a certain period of time. State 2 may be seen in **FIG. 8B** (although the shopper is not in front of the shopping cart in this image). It should be understood that the colors of the projection lights are arbitrary, and that other colors may be utilized. It should further be understood that alternative illumination techniques of the lines, words, and/or symbols may be utilized.

**State 3** (e.g., orange lights): the customer begins to pick up the items to scan barcodes (or other machine-readable indicia) of the items one-by-one and to place the items in the bagging area. This process (and state) lasts until all products in the cart have been removed from the cart and added to the shopping list, after which the lights may turn violet. State 3 may be seen in **FIG. 8C****.**

**State 4** (e.g., violet lights): after each of the items is scanned by the point-of-sale (or other single or bulk scanning process), the customer is enabled to proceed with the payment. After successful payment, the lights may turn blue. State 4 may be seen in **FIG. 8D****.**

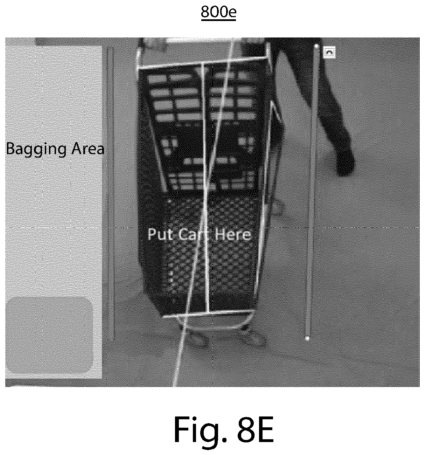

**State 5** (e.g., blue lights): the customer can reload the cart with the purchased items/bags (from the bagging area to the cart) so the user can exit the supermarket. State 5 may be seen in **FIG. 8E****.**

**State 6** (e.g., green lights): when the self-checkout, payment, cart reload has been completed, the customer may leave the area and the system may return to state 1. State 6 may also be seen in **FIG. 8E****.**

**Error State:** in the case where error(s) or misbehavior(s) by the customer are detected, the system may transition into an alarm state (e.g., red lights). Depending on the error or misbehavior, the red lights may be flashed or otherwise. Errors may occur when a user mistakenly places a scanned item back into a cart or elsewhere other than in the bagging area. Misbehavior occurs when a user takes an item out of a shopping cart or basket and does not scan the item before placing the item in the bagging area or elsewhere. Another example of an error or misbehavior is when an item is not removed from the cart or basket before placing scanned items back into the cart It should be understood that there are many other errors and misbehaviors that the system may be trained to identify, and that errors and misbehaviors may be handled differently or the same (e.g., same colors, same colors but illumination effects (e.g., constant color versus flashing color), different colors, flood area with colored light, etc.).

The above self-checkout processing states are illustrative, and it should be understood that additional and/or different self-checkout states may be included. By using a smart projector that projects light lines that define a virtual lane and changing color of the light lines and/or other illumination signals for shoppers to see during different phases of the self-checkout process, the shoppers are provided with a more user-interactive experience not centered around an electronic display at the self-checkout station.

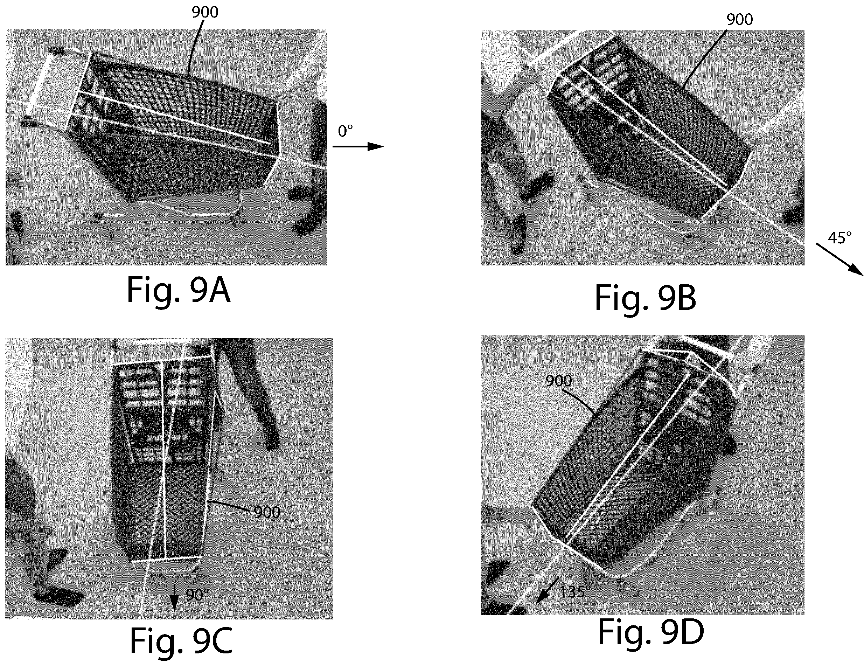

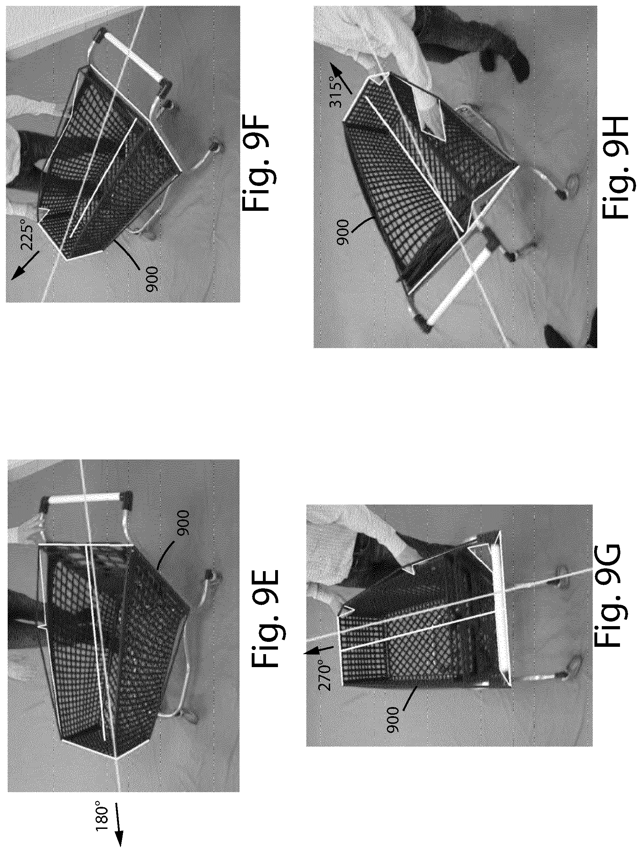

With regard to **FIGS. 9A-9H****,** images of an illustrative shopping cart **900** positioned at different angles 0 degrees to 315 degrees in 45 degree angles for training an imaging system to identify the shopping cart when positioned at a self-checkout area are shown. Additional or fewer angles may be utilized, as well. The imaging system may be trained to recognize the shopping cart at each of the different angles so as to identify that a shopping cart is located within a virtual self-checkout lane. The different angles of the shopping cart may be stored in memory **308** or data records **312** of **FIG. 3A** and used by the processor **302** in executing the software **304** to support guidance to shoppers during self-checkout at a retail store.

### Shopping Cart/Basket - Automated Items Identification Solutions

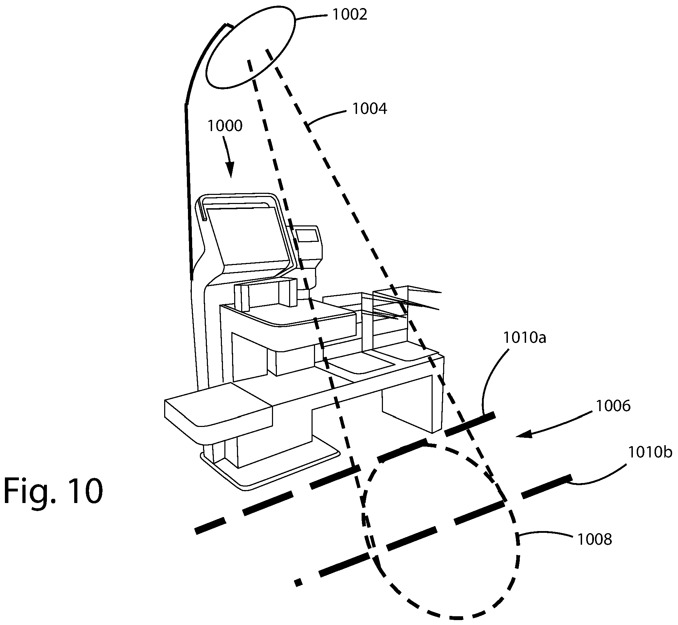

With regard to **FIG. 10****,** an illustration of an illustrative self-checkout station **1000** may be configured with an overhead, non-orthogonal camera **1002** (i.e., a camera that is not oriented to capture images directly above a shopping cart, but rather at an angle less than 90-degeres) at the self-checkout station **1004** for imaging shopping carts and/or shopping baskets is shown. In this case, because the overhead, non-orthogonal camera **1002** is arranged to capture images a non-normal or non-orthogonal orientation, the field-of-view **1004** may capture images within a virtual (or non-virtual) lane **1006** with a non-circular or skewed image plane **1008,** as represented on a floor at the virtual lane **1006** as a result of the overhead, non-orthogonal camera **1002** being non-normal relative to the floor. It should be understood that the image plane and field-of-view, and that alternative configurations of a camera may be used. It should further be understood that cameras at multiple angles and orientations may be utilized. As a result of the overhead, non-orthogonal camera **1002** capturing images with a non-normal angle relative to the floor, there is a higher likelihood of the captured images have occlusions of a space defined by walls of a basket of the shopping cart by the wall(s). In addition, the shopper may also occlude items contained in the basket as a result of a hand, arm, head, and/or body being positioned within the field-of-view **1004** and between the shopping cart and the camera **1002.** It should be understood that virtual lane lines **1010a** and **1010b** may also be projected onto the floor in front of the self-checkout station **1000** and other functionality may be provided by the self-checkout station **1000** in the same or similar manner as described with regard to **FIG. 2****.**

Because the overhead, non-orthogonal camera **1002** may be positioned in a location that the station **1000** may block the ability to display virtual lane line **1010a** and/or virtual lane line **1010b,** a projector may be placed in a different location than the camera **1002.** Although the overhead, non-orthogonal camera **1002** predictably has the likelihood of having more occlusions than a top-down camera, it should be understood that top-down cameras, such as top-down camera **220** of **FIG. 2****,** may also have occlusions that are generally as a result of a shopper obstruction visibility into a portion of the shopping cart or other situation, such as if the shopping cart is at an angle that is not directly beneath the top-down camera.

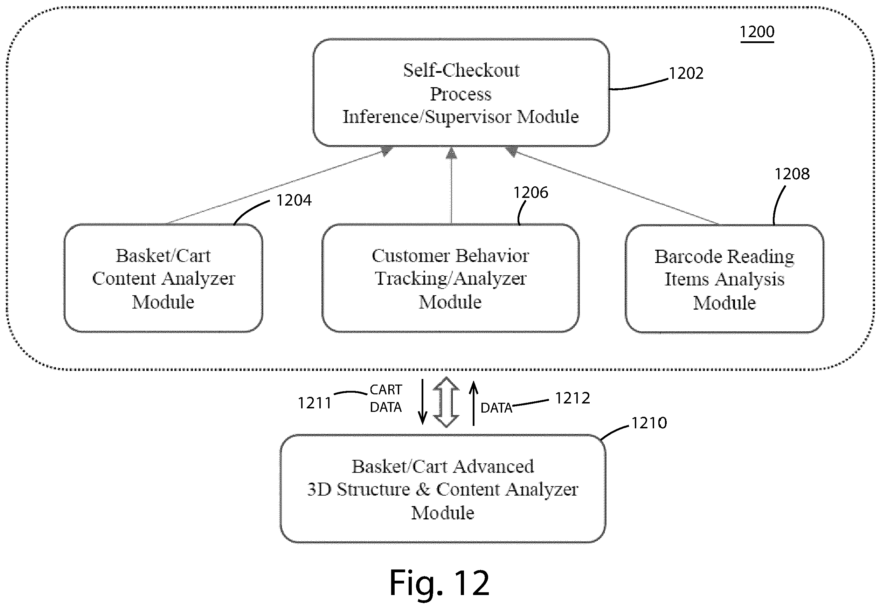

Using a sensing and inference process, as provided in **FIG. 12****,** to support a reliable shopping carts content analysis from a non-orthogonal (e.g., angle other than 90 degrees), top-down camera views for self-checkout process control purposes may still be reliably performed despite not having a full view of an inside a basket of a shopping cart. Having one or more shopping carts in "random positions" inside the scene means that, due to the 3D geometrical structure of the cart basket, the mesh walls of the shopping carts can partially obstruct a view of the inside of the baskets themselves, thereby providing for a see-through semi-transparent effect that makes reliable classifications of content of the shopping cart much more difficult. To overcome the problem of the mesh walls of the baskets of the shopping carts, the self-checkout station may leverage: (i) the a priori known geometric 3D structure of the shopping carts, and (ii) the partial transparency of the mesh wall of the cart basket.

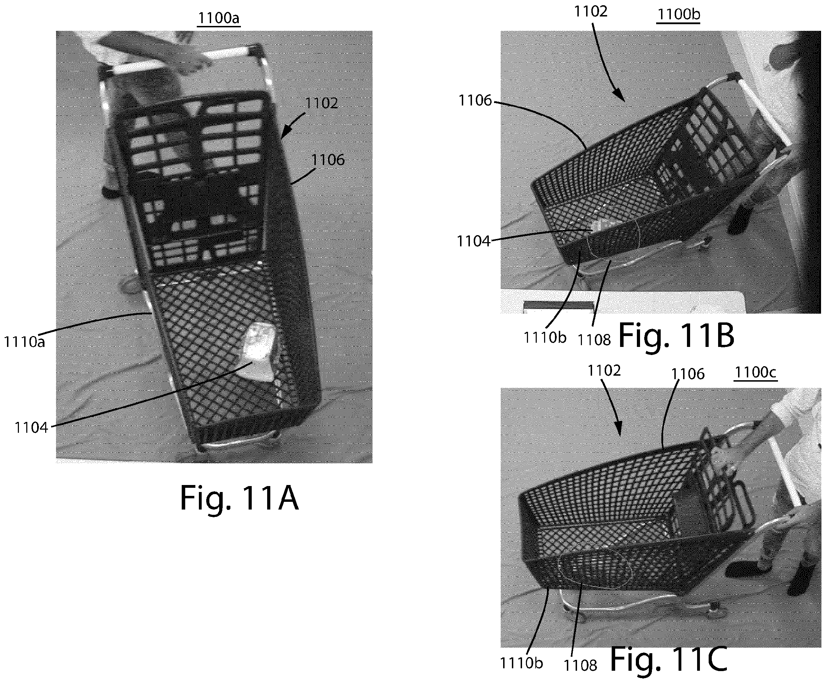

With regard to **FIGS. 11A-11C****,** images of an illustrative scenes **1100a-1100c** (collectively **1100**) in which a shopping cart **1102** has an item **1104** positioned in a basket **1106** of the shopping cart **1102** oriented at different angles are shown. In this case, the majority of the space defined by the basket **1106** is viewable by the camera such that there are no or limited occlusions and the item **1104** can be identified in the captured image and identified by an identification circle **1108 (****FIG. 11B****).** That is, when the shopping cart **1102** is oriented at an angle aligned with a vertical axis of the camera view that allow visibility of a bottom surface **1110a** of the basket **1106** without obstruction, there are essentially no occlusions.

With regard to **FIG. 11B****,** the shopping cart **1102** is shown at another angle relative to the camera such that the shopping cart orientation is not aligned with the vertical image / view axis, which means that the bottom surface **1110a** of the basket is not fully visible as a result of a sidewall **1110b** of the basket **1106** occluding the bottom surface **1110a.** As shown, the object **1110** is partially unobstructed and partially obstructed by the sidewall **1110b.** The identification circle **1108** spans across the sidewall **1110b.**

As shown in **FIG. 11C****,** the shopping cart is at another angle that is approximately perpendicular to the vertical image / view axis of the camera such that the object **1104** is not viewable without obstruction, but fractionally viewable via openings in the sidewall **1110b,** which is a typical mesh sidewall of a shopping cart. Fractionally viewable means that the object is viewable in small segments via each of the openings defined by the sidewall **1110b** as a result of having different colors and/or contours than the structure of the sidewall of the basket **1106,** as further described herein.

With regard to **FIG. 12****,** an illustration of an illustrative system controller **1200** and modules for monitoring and controlling a self-checkout process of a self-checkout station of a retailer inclusive of an illustrative module for performing an advanced 3D structure and content analyzer of a shopping cart and basket is shown. The controller **1200** may include a self-checkout process inference/supervisor module **1202,** basket/cart content analyzer module **1204,** customer behavior tracking/analyzer module **1206,** and barcode reading items analysis module **1208.** A basket/cart advanced 3D structure and content analyzer module **1210** may also be included. Modules **1204, 1206, 1208,** and **1210** may be considered sensor modules, while module **1202** may be considered a system process module. Each of the sensor modules **1204, 1206, 1208,** and **1210** may be configured to set one or more status classifications based on results from the respective functions. Each of the modules **1202, 1204, 1206, 1208,** and **1210** may be executed by a single processor or a combination of processors that are local at the self-checkout station and/or remote from the self-checkout station.

The self-checkout process inference/supervisor module **1202** may be configured to manage the self-checkout process, which includes managing and coordinating with the other modules **1204-1208,** as described with regard to **FIG. 3B** and corresponding modules **332, 336,** and **340.** In an embodiment, the module **1208** may include scale weighing of items and advanced object recognition (e.g., identify color of and writing on labels and shape of items or other features (e.g., caps)) to further ensure secure reliability of self-checkout transactions. The basket/cart advanced 3D structure and content analyzer **1210** may be integrated into the controller **1200** or be independent thereof. Input to the analyzer module **1210** may include cart data **1211** produced by the basket/cart content analyzer module **1204,** thereby serving as a priori information for use by the module **1210.** Output from the analyzer module **1210** may be data **1212** that is communicated by to the controller **1200.** The data **1212** may include item identification, cart classification status (e.g., "Empty," "Not Empty," "Occluded," etc.) information, or otherwise, and be utilized by any or all of the modules **1204, 1206,** and **1208** in performing those respective functions.

In a fully automated self-checkout scenario, the self-checkout system is to be capable of automatically evaluating the shopping cart content status in real-time while providing: (i) user-friendly human machine interaction, (ii) optimized supermarket space utilization, and (iii) reduced system costs. These capabilities promote a scenario where position of the shopping cart is not constrained to a dedicated lane (e.g., virtual lane **225** of **FIG. 2****)** or to a preferred orientation, such as an orientation in which the shopping cart is aligned with a vertical image/view axis so that the bottom of the basket is fully viewable. Such a configuration provides greater freedom and flexibility for a shopper, but at the same time adds complexity to the automatic system inference modules being utilized to aid in reducing potential fraudulent transactions by monitoring the bottom of the basket to provide reliable classification of the cart content status, such as "Empty," "Not Empty," "Obstructed," and "No Cart."

To manage the complex scenario, an enhanced analysis/processing pipeline may be capable of (i) cart orientation estimation (module **1204)** and (ii) 3D structure reconstruction/inference from 2D images and occlusive planes/surfaces detection (module **1210).** Module **1210** supports an ad-hoc classification module to manage the in-view (i.e., visible) and see-through (i.e., occluded or obstructed) situations, which are used to augment the controller **1200** with the module **1210.**

The module **1204** is a sensing module that analyzes an "Item Pickup Region/ROI" and provides information about the cart/basket content status (e.g., "Empty," "Not Empty"). The module **1204** may perform a function of estimating cart orientation to provide information to include an occluding planes estimation provided by the module **1210.** The process may include estimating the shopping cart occlusive planes by leveraging: (i) the cart orientation, (ii) the shopping cart 3D structure, (iii) convex hull normalized contour of the segmented basket of the shopping cart, and (iv) specialized see-through effect management for partially occlusive planes/surfaces, as further described herein. A priori information of the shopping cart may be utilized by the module **1210** as provided by the basket/cart content analyzer module **1204** in performing respective analyses.

The module **1206** is a sensing module configured to monitor the "Item Pickup, Scan and Bagging Regions/ROIs" to track and analyze movements of customers in the scene to verify if the actions are compliant with item scanning reference behavior. The module **1206** may include an artificial intelligence (AI) module that is trained to recognize any number of known scans and motions for both normal scans and fraudulent scans.

The module **1208** may support multi-camera imaging to perform a machine-readable indicia (e.g., barcode) reading task inside the "Item Scan Region/ROI," and, based on multiple images streams, perform additional image analysis tasks to support fraudulent actions (e.g., label hiding, label replacement, etc.) detection.

The self-checkout process inference/supervisor module **1202** may be configured to supervise the whole process inside the self-checkout surveillance region/ROI and make decisions based on the information provided by the sensing modules **1204, 1206, 1208,** and **1210,** for example. It should be understood that there may be additional sensing and/or inference modules to perform additional smart monitoring functions. When actions not compliant with trained reference behaviors (anomalous behaviors) are detected, the system may alert the customer and eventually supervisory personnel though adequate means (e.g., screen messages, sounds, alerts, red lights, etc.). Moreover, the module **1202** may be configured to combine results from different modules **1204, 1206, 1208,** and **1210** to determine that a fraud is being committed (e.g., scan is normal, but barcode does not match item, therefore label switching fraud may have been committed).

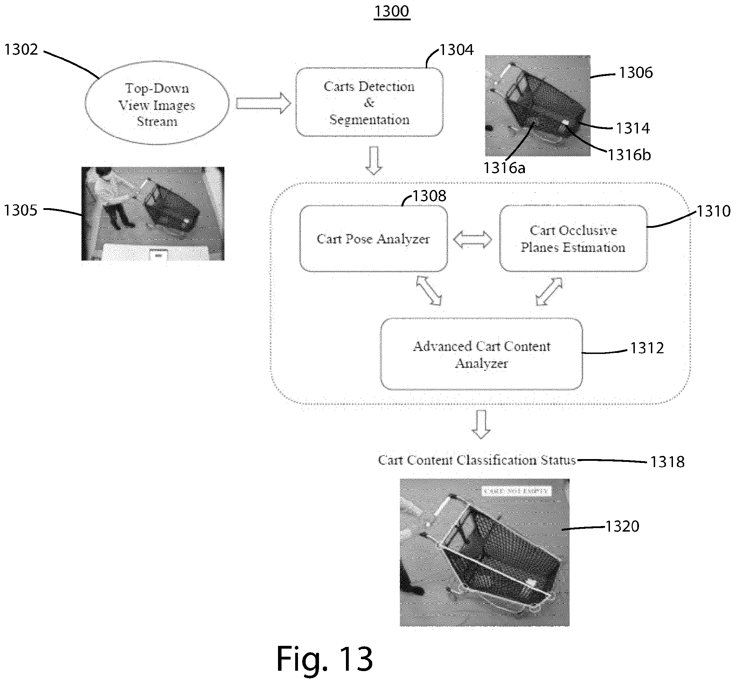

With regard to **FIG. 13****,** an illustration of an illustrative process **1300** for performing the functionality of the (i) basket/cart content analyzer module and (ii) basket/cart advanced 3D structure and content analyzer module of **FIG. 12****,** is shown. The process **1300** may start at step **1302,** where images, such as top-down, orthogonal view images or top-down, non-orthogonal view images, are received. At step **1304,** a carts detection and segmentation function may be performed to (i) detect a shopping cart (and/or shopping basket) in a captured image and (ii) perform segmentation that uses a captured image **1304** from an image stream and define a sub-image **1306** within a captured image inclusive of the shopping cart and/or shopping basket. The segmentation may be performed by using a "color and contours" model-based image processing algorithm. Machine learning may be utilized to perform cart detection and segmentation, such as using the Yolo transfer learning algorithm. Other processes as described with regard to the cart pose analyzer **324** of **FIG. 3B** may be used to identify the location and position of the shopping cart, whether a top-down (overhead), orthogonal camera or top-down, non-orthogonal camera is being utilized.

The sub-image **1306** may be processed to determine position of the shopping cart by step **1308,** perform a cart occlusive planes estimation at step **1310,** and perform an advanced cart content analysis at step **1312.** The cart occlusive planes estimation of step **1310** may determine whether any walls or other features of a basket of a shopping cart are obstructing visibility into the shopping cart basket (e.g., based on a shape of a floor of the shopping cart). The advanced cart content analyzer of step **1312** may perform an advanced image processing analysis to determine whether any objects are contained in the basket of the shopping cart, by (i) identifying any objects in a visible portion of the basket of the shopping cart (e.g., identifying an item with a different color and contour than the basket), and (ii) identifying any objects in an occluded portion of the basket of the shopping cart (e.g., using small blob analysis and merging the small blobs to detect an item in the occluded region of the basket), as further described herein. Small blobs of side wall occlusions means blobs that are defined by space in open areas of a mesh side wall of a basket of a shopping cart, where the small blobs identification may be trained during a training phase and identification may be trained based on being a different color and contour.

In this example, the shopping cart **1314** in the sub-image **1306** includes two items **1316a** and **1316b,** and a cart content classification status **1318** generated by the advanced cart content analyzer at step **1312** is set to "Not Empty." It should be understood that classification may be represented by status identifiers (e.g., a numerical code, Boolean value, and/or other alphanumeric, etc.) that are indicative that the shopping cart includes at least one item in the shopping basket. An image **1320** with a status identifier that may be displayed on a monitor for the shopper as a notification for the status classification. Additionally or alternatively, a processor executing the modules (e.g., modules of **FIG. 12****)** may generate an audible signal that is communicated via a speaker to the shopper as a notification for the status classification to indicate that the shopping cart is not empty and to finish emptying and scanning remaining items that there is an obstruction of the basket of the shopping cart that needs to be moved, or otherwise.

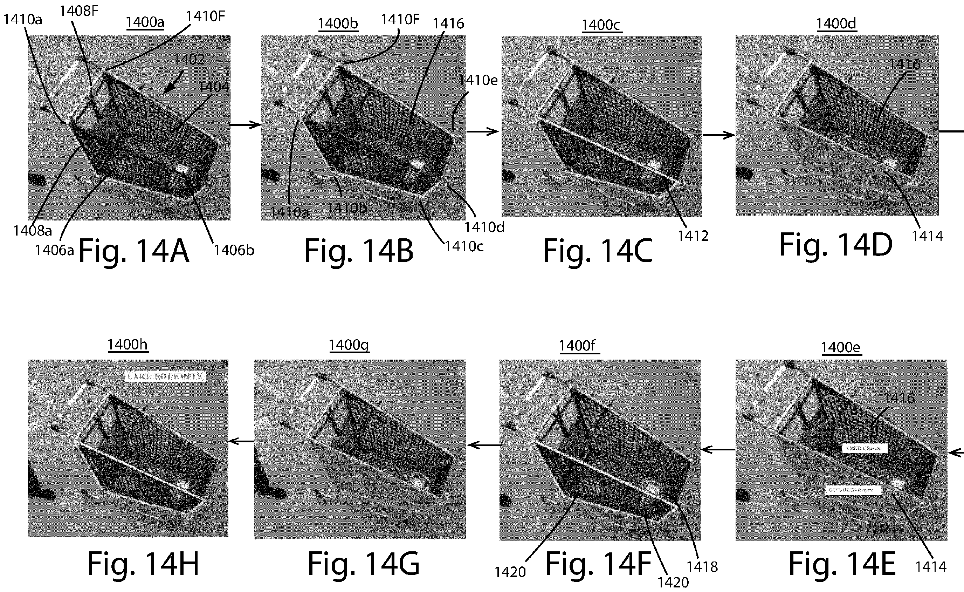

Generally, the modules of **FIG. 13** operate cooperatively, eventually iterating multiple analysis refinement steps and perform functions of:
(i) cart orientation;
(ii) basket normalized convex hull analysis that performs a normalized shape morph, in general, from a quadrilateral (e.g., if the cart is aligned with a field-of-view of the camera) to a hexagon (e.g., if the cart is not aligned with the field-of-view of the camera) depending on the cart pose;
(iii) shopping cart 3D geometric structure analysis by the system using a priori information to infer the 3D structure of the cart, and occluding planes, by a 2D view by:
   (1) classifying the normalized convex hull vertices as:
      (a) belonging to an occlusive surface (see, for example, **FIG. 14B** with points **1410a-1410d** shown in circles on the corners of a right-side basket wall);
      (b) belonging to a non-occlusive surface (see, for example, **FIG. 14B** with points shown in circles **1410e** and **1410f** on top corners of a left-side wall);
   (2) inferring missing boundaries of the occluding plane (see, for example, **FIG. 14C** shown as line **1412** on top edge of right-side wall);
   (3) inferring the occlusive/semi-transparent plane region **(****FIG. 14D****,** right-side wall **1414,** which is graphically highlighted);
(iv) after the approximate 3D reconstruction and occlusive planes classification, the system may:
   (1) divide the basket **1404** in two main regions: visible **(****FIG. 14E****,** region **1416)** and occluded **(****FIG. 14E****,** region defined by right-side wall **1414);**
   (2) apply an ad-hoc cart content analysis classification specific for each of the regions **1414** and **1416** as shown in **FIGS. 14D** and **14E****,** where the items **1406** that are found in the visible region **1416** may be circled **1418** (e.g., green circle), while circles in the occluded region **1414** may be circled **1420** (e.g., red circles). The occluded region **1414,** due to the holes or spaces defined by the mesh wall features, enables visibility of the items **1406,** but in many small regions, and receive a special image processing treatment to integrate the partial information (i.e., small blobs of the items **1406** identified in the spaces defined by the right wall) to provide a reliable classification;
   (3) merge the classification results of the analyzed regions, occluded region **1414** and visible region **1416,** to determine a final cart content status response (see **FIG. 14H****)** and optionally displayed in **FIG. 14H** (e.g., "CART: NOT EMPTY"):
      (1) "EMPTY" or "CART: EMPTY";
      (2) "NOT EMPTY" or "CART: NOT EMPTY";
      (3) "OCCLUDED" or "CART: BASKET OBSTRUCTED FROM CAMERA"; or
      (4) NO CART or "NO CART OR BASKET IN SELF-CHECKOUT AREA".

With regard to **FIGS. 14A-14H****,** a set of processed captured images **1400a-1400h** (collectively **1400)** of an illustrative shopping cart **1402** that is image processed to analyze and graphically identify various features of a basket **1404** of the shopping cart and wall(s) that may occlude items **1406a** and **1406b** (collectively **1406)** in the basket **1404** of the shopping cart **1402** is shown. In **FIG. 14A****,** an image processing process and/or object recognition process (e.g., trained neural network may identify shape and orientation) may be used to define orientation of the shopping cart **1402.** The process may identify six outer edges **1408a-1408f** (collectively **1408)** of the basket **1404** that defines a hexagon, which includes identifying a rear-right edge **1408a,** bottom-right edge, front-right edge, top-front edge, top-left edge, and rear-top edge **1408f.** Graphical lines may be overlaid on each of the edges, optionally in different colors (yellow line on edge **1408f,** red line on front-top edge, and blue lines on each of the other edges). In addition, corners of the intersections at each of the edges **1408** may be identified by circles **1410a-1410f** (collectively **1410).** The circles **1410** may have a common color, such as red.

In **FIG. 14B****,** corners (within circles **1410a-1410d)** of a wall (right-sidewall) that occludes items **1406** in the basket **1404** may be identified. It should be understood that alternative graphics other than circles may be utilized. In **FIG. 14C****,** a top edge of the occlusion wall (right-side wall) may be identified and marked by a graphical line **1412,** in one embodiment an orange line. In **FIGS. 14D** and **14E****,** the occlusion wall **1414,** which also serves as the occluded region, and visible region **1416** may be identified and graphically marked (e.g., blue highlight occluded region **1414).** In **FIGS. 14F** and **14G****,** the objects **1406** may be identified in each of the regions **1414** and **1416** and optionally circled in circles **1418** (upper portion of item **1406b** in visible region) and **1420** (lower portion of item **1406b** and entire item **1406a).** In identifying the item(s) in the occluded region via the occlusion wall **1414,** a determination that small blobs via the openings in the occlusion wall **1414** may be seen, and an algorithm may aggregate the small blobs into a larger, continuous blob that includes each of the small blobs. In an embodiment, if an item is identified as a set of small blobs in the occluded region and then the visible region includes an item relatively continuous with the larger blob formed by the small blobs, then a determination may be made that the object is visible in both the occluded region and visible region. Alternatively, both identified portions of the item may be treated as separate items as such an analysis may simply result in a status of the cart being set to "Not Empty," for example. In **FIG. 14H****,** a determined cart status, such as "CART: NOT EMPTY," may be determined and displayed on the image **1400h** for a shopper to view as a notification for the status classification. An audible notification of the determined cart status may also be communicated (e.g., broadcast) to the shopper as a notification for the status classification.

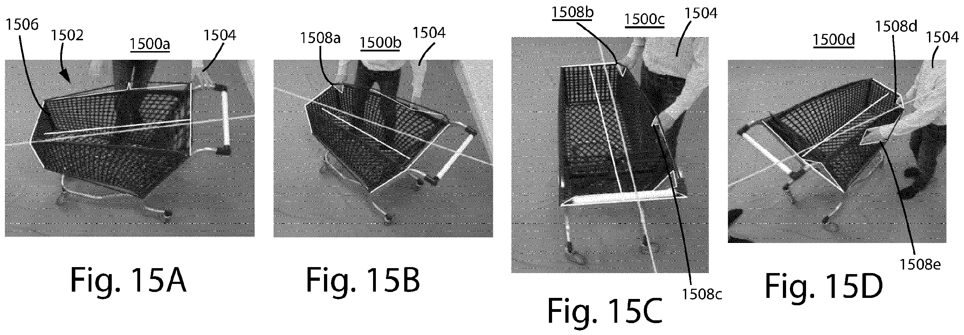

With regard to **FIGS. 15A-15D****,** a set of processed images **1500a-1500d** of an illustrative shopping cart **1502** that is image processed to identify occlusions of the shopping cart **1502** as a result of a shopper **1504** blocking a portion of a basket **1506** of the shopping cart **1502** is shown. Occlusions of the basket **1506** occur when a portion of the body (e.g., head, arm, hand, etc.) of the shopper **1504** blocks the view of a space defined by the basket **1506,** and the basket/cart advanced 3D structure and content analyzer module **1210 (****FIG. 12****)** may determine that an occlusion exists based on position, orientation, dimensions, and/or color of the basket **1506.** In **FIG. 15A****,** no occlusion exists, but in **FIGS. 15B, 15C,** and **15D****,** occlusions **1508a-1508e** (collectively **1508**) may be identified by lines that are drawn around the respective occlusions **1508,** where the lines extend into space defined by the basket **1506** (as indicated by the lines that outline the basket **1506**) because area outside of the basket **1506.**

### Shoplifting and Shopper Fraud Solutions

In order to provide for automated self-checkout stations, appropriate shoplifting and shopper fraud prevention features and processes should be included as part of self-checkout stations in order to limit or prevent various shoplifting and shopper fraud that is known to be problematic for retailers. To become a standard in the real-world, robust/secure automation solutions that provide for smart systems capable of monitoring behaviors of customers and managing real-world variability/unpredictability of customers may be integrated into the self-checkout. In this context, (i) selection of the proper sensing devices, (ii) appropriate inference algorithms, and (iii) integration of modules that perform the automated, smart functionality may be integrated into self-checkout stations, thereby supporting robust and convenient self-checkout station solutions.

To deliver secure and effective self-checkout systems and applications, whole payment transactions (i.e., items scanning, bill acceptance, and payment) are to be carried out in an easy, reliable and correct way, which means:
1. Make sure that all items in the cart/basket have been scanned and added to the bill list;
2. No fraudulent behavior, by choice or by accident, has been carried out by the customer, such as: (i) label replacement, (ii) hidden label, (iii) scanning avoidance, and (iv) unscanned items remaining in the cart/basket.
3. Scanning difficult labels and errors are to be managed seamlessly.

To provide a secure experience, a smart integrated system inclusive of (i) smart sensing modules, (ii) reasoning inference modules capable of overseeing/supervising the whole self-checkout process stages, such as: (1) the customer enters the self-checkout area with the basket / cart full of items to buy, and (2) the customer begins to scan the items one-by-one using the provided barcode reader and place the items in the bagging area following the scanner, and (3) when all the items have been added to the bill through the scanning/barcode reading process and the cart/basket is empty, the customer can proceed with the payment and leave the retailer.

In an embodiment, the self-checkout system that supports smart monitoring of customers may be based on, but not limited to, sensing modules and inference modules (e.g., modules **1204, 1206, 1208,** and **1210** of **FIG. 12****).** One or more sensing modules (e.g., basket/cart content analyzer module **1204** and basket/cart advanced 3D structure & content analyzer module **1210)** may be configured to monitor the cart/basket to check for cart status (e.g., "Empty," "Not Empty"). One or more customer action tracking modules (e.g., customer behavior tracking/analyzer module **1206)** may analyze a scene in view of a camera at the self-checkout station for fraudulent and incorrect actions. One or more scanning modules (e.g., barcode reading items analysis module **1208)** may perform barcode reading and items analysis. One or more inference module(s) (e.g., self-checkout process inference/supervisor module **1202)** may be configured to integrate the information streams from the sensing modules, make decision about the scene actions and interact with the customer, if any irregularities (e.g., identification of potential fraud) necessitate such interaction. The data streams may include, but are not limited to, scene top-view images, scanner images, barcode reading results, scale weighings, bagging area weighings, etc.) to provide a broader scam detection coverage. Al or other processes that identify and/or correlate the data of the data streams to detect fraud may be utilized.

Self-checkout systems are becoming more and more a desired feature in the retail environment, but until recently, self-checkout systems have been unable to meet real-world needs as a result of smart and inferential systems being difficult to achieve. Such real-world needs have to monitor for and identify fraudulent activities, such as, but definitely not limited to:
(i) the "banana trick": scanning an expensive item using the code for a less expensive item;
(ii) the "pass around": a thief "passes" an item around a payment device/scanner while pretending to scan the item for payment; and
(iii) the "switcheroo": a thief replaces/covers a label of a pricey item with a less expensive item.

### Basket/Cart Content Analyzer Module

With further regard to **FIGS. 3B** and **12****,** the basket/cart content analyzer module **332/1204,** which may be the same or perform similar, but not identical functions, may be configured to analyze an item pickup region/ROI (e.g., from a shopping cart or shopping basket) and perform real-time classification (e.g., "Empty," "Not Empty") of content in the basket/cart to make sure that the self-checkout process is correctly completed after all items have been removed from the cart, scanned one-by-one, and added to a shopping bill.

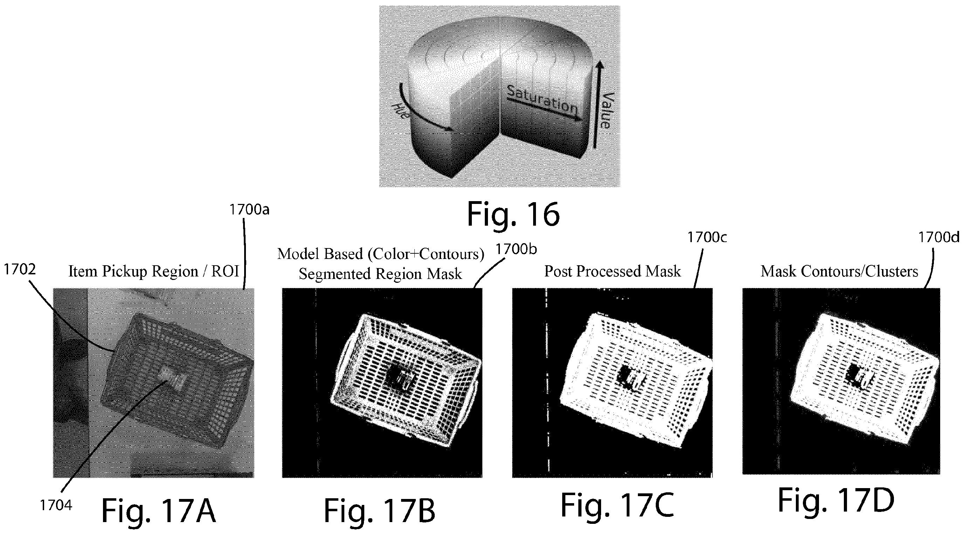

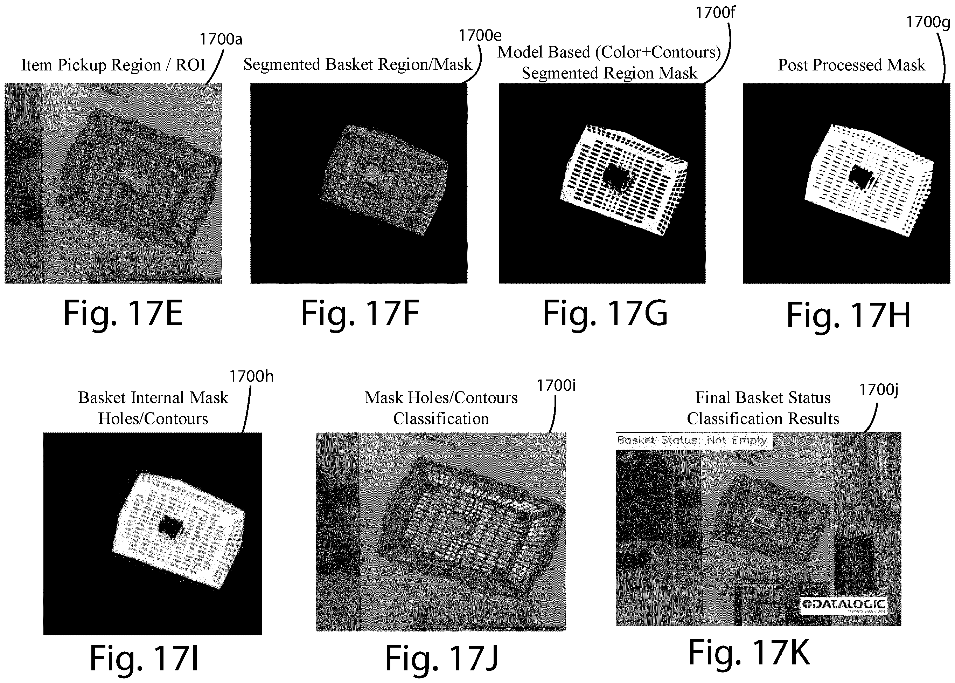

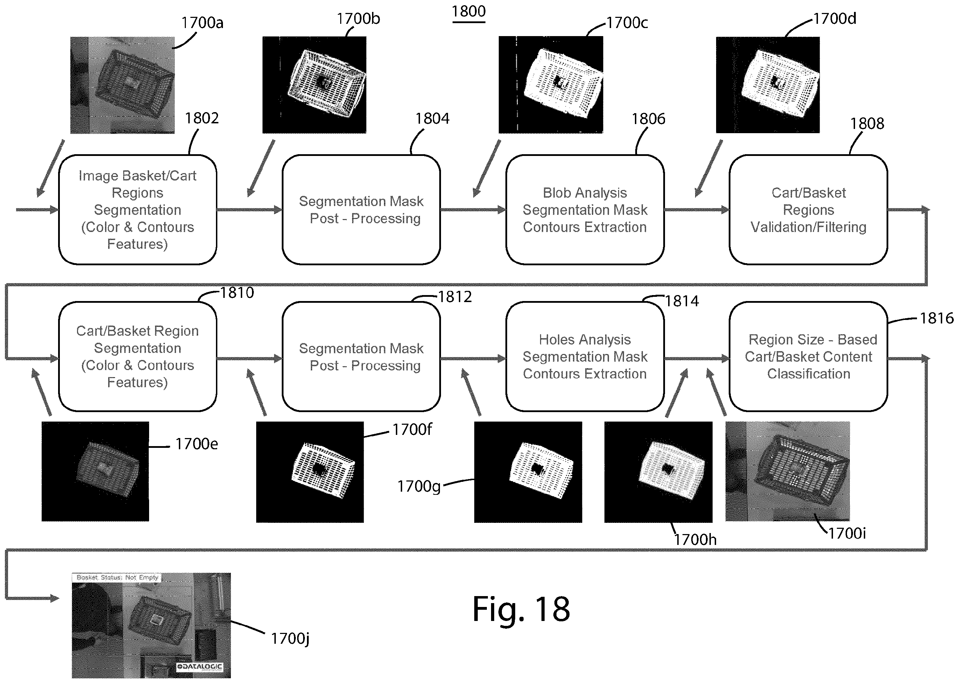

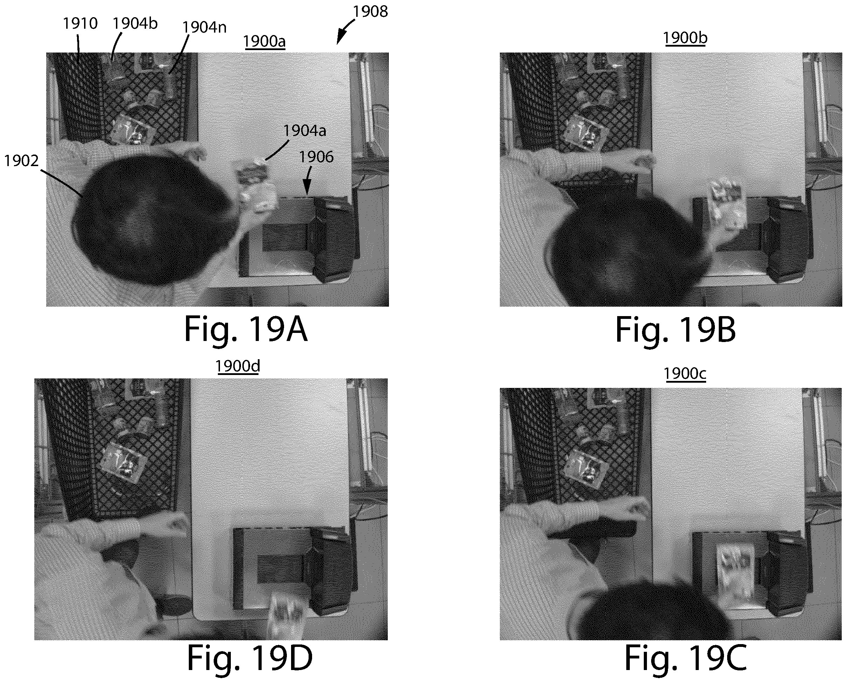

The cart/basket analyzer module **332/1204** may rely on two phases, (i) a cart/basket model training/learning phase, and (ii) a cart/basket content analysis runtime phase. With regard to **FIGS. 17A-17K****,** illustrative captured and processed images **1700a-1700k** (collectively **1700**) of a scene in processing a captured image of a shopping cart or shopping basket **1702** in which an item **1704** is location to generate a content status classification (e.g., "Empty," "Not Empty," etc.), such as may be produced in the illustrative content status classification process of **FIG. 18** is shown.
(i) The shopping cart/basket model training/learning phase includes training the self-checkout system to learn models of cart(s)/basket(s) to be analyzed and add the models of the shopping cart(s)/basket(s) to a shopping cart/basket models dataset. It should be understood that a retailer may have one or more of shopping carts and/or baskets. For example, shopping carts may include large and small shopping carts. Shopping baskets may include handheld baskets. Another shopping cart and/or basket may include handicap scooters and wheelchair-type devices.
(ii) The cart/basket content analysis runtime phase **(****FIG. 19****):** given the cart/baskets models dataset and the top-down view images of the item pickup region, the cart/basket analysis may be performed in two stages, including (1) a cart/basket regions segmentation step, and (2) a Cart Content Analysis Step, as follows:
   (1) Cart/Basket Regions Segmentation Step: To segment the cart/basket regions, a feature-based segmentation process that relies on a raw color (+ contours) model may be employed as follows:
      (a) an input captured image **(****FIG. 17A****)** may be converted to an appropriate color space, such as a hue, saturation, value (HSV) space **1600,** as shown in **FIG. 16****,** and subsequently segmented by applying an appropriate multi-dimensional windowed thresholding schema **(****FIG. 17B****)** to the multi-dimensional feature space based on the pre-learned models of the cart/basket, where this step produces a binary mask that is subsequently enhanced by a suitable post-processing stage **(****FIG. 17C****)** with a post-processed mask to filter out noise;
      (b) a contour detection algorithm may be applied to the binary mask to detect the relevant cart/basket regions **(****FIG. 17D****).** The detected regions/clusters may be filtered based on geometric constraints and the regions/clusters including cart/basket regions that pass the filtering process are accepted as possible cart/baskets and passed down the pipeline to analyze their content status **(****FIG. 17E****);** and
      (c) during the cart/basket regions segmentation step, a raw cart/basket model may be employed to satisfy the robust detection/segmentation specifications.
   (2) Cart Content Analysis Step: given the list of possible cart/basket regions detected in the previous step, the possible cart/basket regions are processed one-by-one, as follows:
      (a) given a region mask, the corresponding image region **(****FIG. 17F****)** may be segmented based on a refined cart/basket model **(****FIG. 17G****);**
      (b) the new segmentation mask may be post-processed **(****FIG. 17H****)** and a contour extraction stage is applied **(****FIG. 17I****)** to detect the holes (i.e., spaces defined by meshed walls of a shopping cart or shopping basket) inside the region (both the structural and the items related ones);
      (c) the detected holes are classified as relevant items or cart holes **(****FIG. 17J****);**
      (d) the presence or absence of detected items inside the cart become an output of the module and used by the inference/supervisor module **1202 (****FIG. 12****)** to make decisions about the self-checkout process **(****FIG. 17K****)** and notify a shopper about the checkout status (e.g., "Basket Empty," "Basket Not Empty," "Obstructed," and "No Basket."

With regard to **FIG. 18****,** an illustrative process **1800** for performing a shopping cart and/or shopping basket content status classification process using advanced image processing techniques is shown. The process **1800** starts at step **1802,** where the captured image **1700a (****FIG. 17****)** is processed by performing an image regions segmentation by performing a color and contours features identification algorithm, as previously described. Resulting from step **1802** is a model-based (color + contours) segmented region mask **1700b,** which may be processed by a segmentation mask post-processing process at step **1804.** Output from step **1804** is the post-processed mask **1700c,** from which a blob analysis segmentation mask that extract contours may be performed at step **1806.** Output from step **1806** may be a mask contours/clusters processed image **1700d.**

A shopping cart/basket regions validation and filtering process may be performed at step **1808** that outputs the segmented basket regions/mask **1700e.** At step **1810,** a shopping cart/basket regions segmentation (color and contours features) process may be performed. Output from step **1810** is a model-based (color + contours) segmented region mask **1700f.** A segmentation mask post-processing process may be performed at step **1812,** where a post-process mask **1700g** may be generated.

At step **1814,** a holes analysis segmentation mask and contours extraction process may be performed. The holes analysis may be used to identify any holes or spaces defined by a structure of the shopping cart or shopping basket **1702.** Output from the process at step **1814** may be a basket internal mask **1700h** that identifies holes/contours of the basket **1702** and may color code the holes and/or contours. At step **1816,** a regions size-based cart/basket content classification process may be performed. The process of step **1816** may result in hole sizes being identified, and may include further color coding each of the holes of the basket **1702** based on size, as shown in image **1700i.** In performing the content classification at step **1816,** an image **1700j** from which the item pickup region/ROI image **1700a** may be processed to determine whether any items are currently in the basket **1702** or the basket **1702** is empty. The content classification process may also include displaying a status (e.g., "Not Empty") on the image **1700j** and/or output an audible signal that may notify a shopper that the shopping cart or basket is "Not Empty," "Empty," or otherwise.

### Customer Behavior Tracking/Analyzer Module

To accomplish the self-scanning task, customers perform a repetitive action of scanning barcodes of every items using the barcode reader provided in the self-checkout line. The item scanning action, hereinafter referred to as visual scan, is a repetitive activity made of the following three steps:
1. Pickup: the customer picks the item from the shopping basket/cart;
2. Scan: the customer passes the item through a field-of-view or read zone of the scanning device; and
3. Drop: the customer places the item in the exit/bagging area

With regard to **FIGS. 19A-19D****,** an illustrative set of images **1900a-1900d** (collectively **1900**) showing a typical checkout sequence of a shopper **1902** performing a visual scan of an item (e.g., grocery item) **1904a** using a checkout scanner **1906** at a self-checkout station **1908** is shown. The shopper **1902** in this case used a shopping basket **1910** in which items **1904b-1904n** (collectively **1904**) were placed while shopping. If a shopping cart were used, analogous image processing would be performed using training from a shopping cart model would serve as the pickup location and structure to be monitored. During the self-checkout sequence, the shopper **1902** in image **1900a** picks up the item **1904a** from the shopping basket **1910** and passes the item **1904a** through the field-of-view or read zone of the scanner **1906** to image and read (e.g., decode) a machine-readable indicia (e.g., barcode) disposed on the item **1904a** in images **1900b** and **1900c.** in image **1900d,** the shopper moves the item **1904a** to a drop (bagging) location for storage in a shopping bag (not shown). In the drop location, a weight scale may be used to correspond weight of the scanned item **1904a,** as stored in a data repository by the self-checkout station (or remotely).

Because the motions of the shopper are repetitive and predictable, an imager may be used to monitor movements of the shopper's hands, arms, etc. so as to identify potential fraudulent or shoplifting behavior and/or actions, as previously described (e.g., the "banana" trick"). To supervise the self-checkout operations and detect fraudulent actions/behaviors, movement of the customer (e.g., hands, arms, etc.) may be tracked and so as to match the customer's actions within the scene to "the reference visual scan behaviors models" stored in a database (e.g., at the self-checkout station).

To accomplish this customer motion monitoring task, the customer behavior tracking/analyzer module **1206** of **FIG. 12** may process video clips (images sequences) to analyze appropriate scene regions (ROIs) based, at least in part, on the following processing block:
(i) Reference Behaviors Database: stores a reference customer actions for both:
   (a) Expected behaviors (good scans, expected scan errors, bad labels);
   (b) Fraudulent behaviors (fake scan, label hiding, multiple items movement, etc.);
(ii) Motion Analyzer: to focus on moving parts in the image:
   (a) Customer Hand Tracker: to detect primitive actions (e.g., pickup, scan, drop);
   (b) Sophisticated Machine/Deep Learning Actions Classifier: using a committee of classifier may help in making the whole classifier more reliable;
(iii) Visual Scan Analyzer: given the known limited or primitive actions and behavior reference models, perform a classification of shopper actions under inspection.

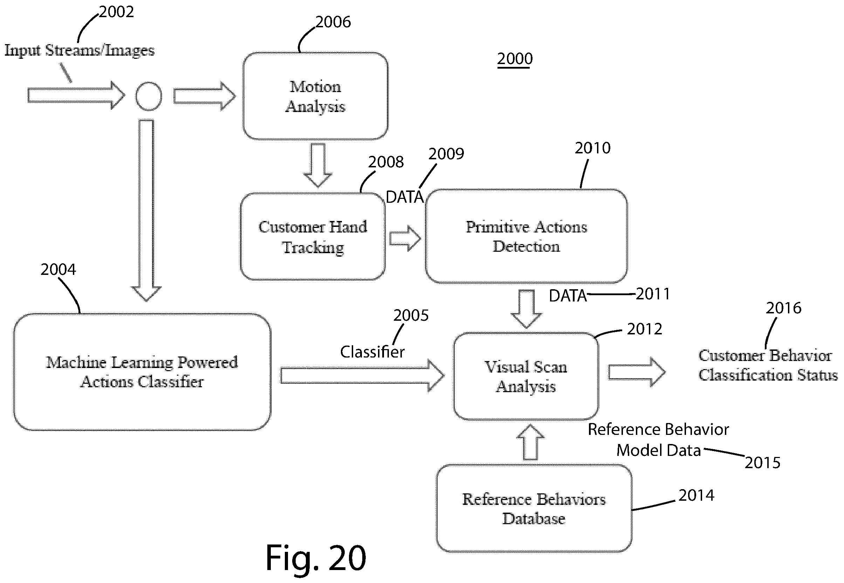

With regard to **FIG. 20****,** a flow diagram of an illustrative process **2000** for performing customer behavior tracking and analysis is shown. Input streams and/or images **2002** may be received and provided to a machine learning powered actions classifier **2004.** The classifier **2004** may use a neural network or other trained artificial intelligence classifier to detect and classify actions contained within the input streams and/or images **2002.** The classifier **2004** may output a classifier (identifier) **2005** indicative of a classification of actions identified by the classifier **2004.**

In an embodiment, a motion analysis **2006** may be performed in parallel with the machine learning powered actions classifier **2004** on the input streams and/or images **2002.** A customer hand tracking module **2008** may be configured to identify and track hand motion and output data **2009** representative of the positions, angles, motion, etc., of a shopper's hand(s) within the scene (e.g., moving within the pickup, scan, and drop locations). A primitive actions detection module **2010** may receive the data **2009** from the customer hand tracking module **2008** to detect the primitive actions (e.g., moving from pickup, scan, and drop locations). The primitive actions detection module **2010** may output data **2011** indicative of primitive actions performed by the shopper while performing scanning of items at the self-checkout station. It should be understood that identical matches of a shopper and a model motion may not occur, but deviations therefrom may be estimated to be within a certain tolerance (e.g., lower certainty of an action). Alternative characteristics of the item (e.g., color, shape, contour, etc.) or other monitored features (e.g., barcode, weight, etc.) may be utilized to improve estimation and certainty that a fraud is not taking place. A visual scan analysis module **2012** may receive (i) the classifier **2005** from the machine learning powered actions classifier **2004,** (ii) the data **2011** from the primitive actions detection module **2010,** and, from a reference behaviors database **2014,** reference behavior model data **2015** to analyze whether the shopper is exhibiting normal behavior, potentially fraudulent or shoplifting behavior, or mistake, as previously described. Resulting from the visual scan analysis module **2012,** a customer behavior classification status **2016** may be generated for use by the self-checkout process inference / supervisor module **1202,** for example, to notify the shopper and/or personnel at the retailer. Other actions may be taken by the module **1202,** as well, such as cease or alter operation of the self-checkout station.

### Barcode Reading Items Analysis And Validation Module

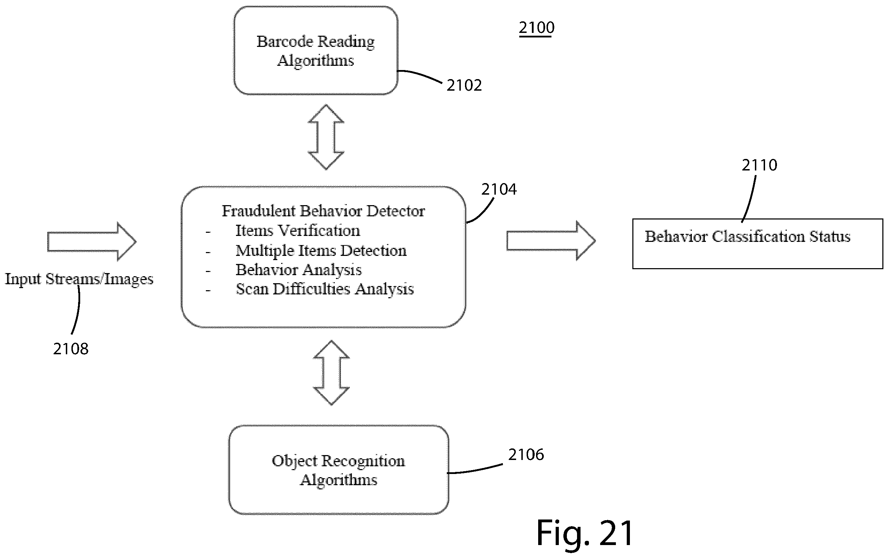

The barcode reading and items analysis module **1208** of **FIG. 12** may be used to perform validation/verification module of barcodes utilizing multiple cameras and respective points-of-views. With regard to **FIG. 21****,** an illustrative barcode reading items analysis process **2100** that includes three main processing modules **2102, 2104,** and **2106** that may be utilized to perform the functions of the barcode reading items analysis module **1208** using input streams and/or images **2108:**
(i) Advanced barcode decoding algorithms module **2102:** an advanced barcode decoding algorithm may be used to decode even distorted or partially occluded labels;
(ii) Fraudulent behavior detector module **2104:** this module **2104** may integrate the information of the barcode reading (label text, location, box, etc.) and object recognition to process and analyze data looking for misbehavior activity patterns;
(iii) Object recognition algorithms module: set of sophisticated computer vision and machine learning-based algorithms configured to:
   (a) Recognize objects by their appearance in a very broad dataset with very high precision; and
   (b) Perform optical character recognition / optical character verification (OCR/OCV) to help disambiguate classification of items with machine-readable indicia or human readable text that are being scanned.

These modules **2102, 2104,** and **2106** support a robust verification process and enhance the system capability to detect fraudulent (or erroneous) actions, such as:
(i) Hidden labels (ex. labels occluded by the customer hands, partial barcodes detection and analysis);
(ii) Label replacement;
(iii) Multiple items passed across the scanning area;
(iv) Fake scans: such as when the customer simulates a scan action, but remains at a distance from the scanner to prevent the label from being read; and
(v) Real scan difficulties.

From the three modules **2102, 2104,** and **2106,** a behavior classification status **2110** may be generated and communicated to the self-checkout process inference supervisor module **1202** for further determining how to manage and process a shopper performing a checkout at the self-checkout station.

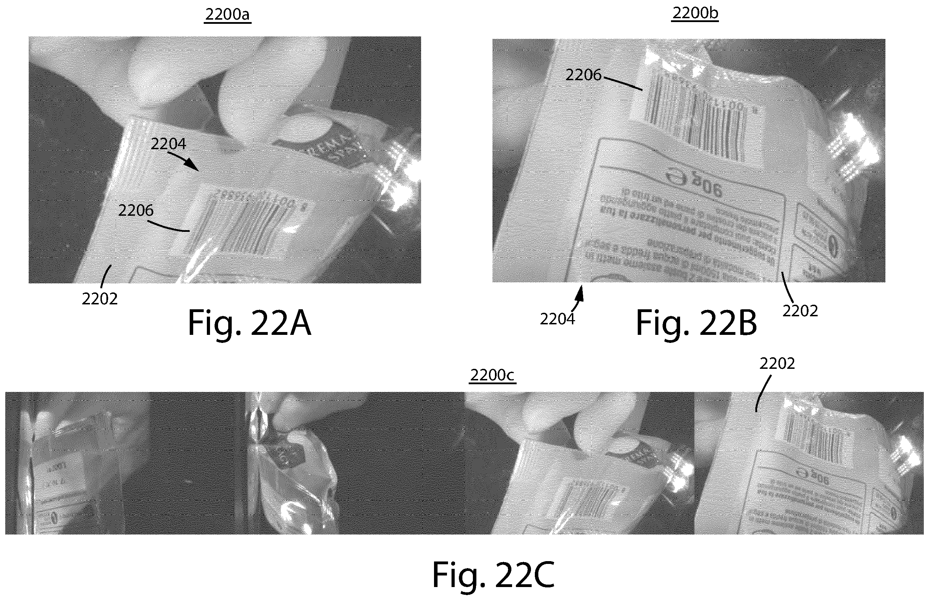

With regard to **FIGS. 22A-22C****,** an set of illustrative images **2200a-2200c** (collectively **2200**) from a scanner of an item **2202** in different orientations and states (e.g., bent, flat, deformed, etc.) are shown. In general, a typical scanner, so as to have a more complete scene coverage, may use multiple image streams from multiple cameras (or multiple views obtained by mean of a splitter or other optical elements), as shown in the images **2200,** and be configured to integrate information captured on labels **2204,** including a machine-readable indicia **2206,** positioned on the item. It should be understood that the label may include more than just the machine-readable indicia **2206,** and the scanner may be configured to decode and read the machine-readable indicial, but optionally to OCR additional information on the label **2204** to further assist the scanner to identify the item. For example, the object recognition algorithms module **2106** may be configured to perform a more extensive analysis of the label than simply decoding the machine-readable indicia **2206.** As shown, image **2200a** includes a single view of the item **2202,** image **2200b** includes a more expansive view of the item **2202,** and image **2200c** includes multiple views of the item **2202** and an advanced image processing algorithm may be configured to identify portions of the same feature(s) (e.g., barcode) on the item **2202** and stitch or otherwise reassemble the different portions to create a complete feature, thereby enabling the module **2106** to better determine the identity of the item **2202.**

### Inference/Supervisor Module

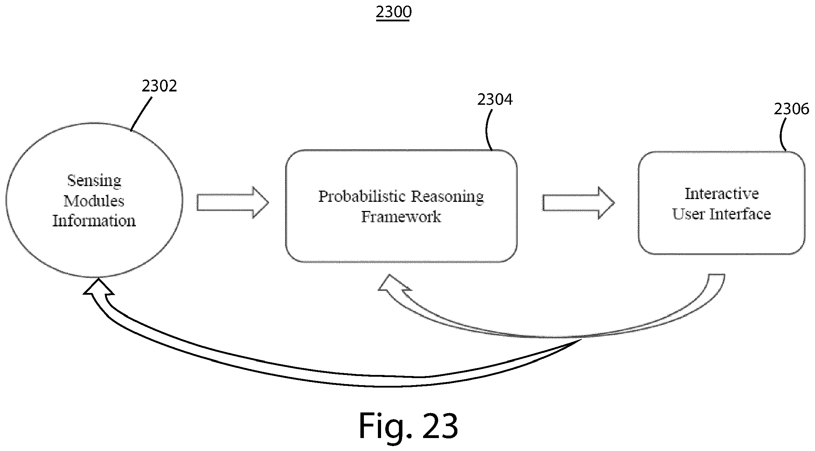

With regard to **FIG. 23****,** a block diagram of an illustrative abstracted self-checkout system and process **2300** for monitoring and controlling a self-checkout process of a self-checkout station is shown. The system and process may include sensing modules information **2302** communicated to or received by a probabilistic reasoning framework **2304** (alternatively described as an inference/supervisor module **1202**) that receives as input primitive information provided by the sensing modules (e.g., basket/cart content analyzer module **1204,** customer behavior tracking/analyzer module **1206,** and barcode reading items analysis module **1208**) about:
(i) cart content status;
(ii) customer behavior classification status;
(iii) validated scanned item information (e.g., barcode reading results, object recognition results, validation process)

The probabilistic reasoning framework **2304** may utilize the primitive information to disambiguate conflicting data, make a final decision on inspected behavior and drive a user interface accordingly to inform the customer and/or store personnel. In particular, the probabilistic reasoning framework **2304** may use advanced Al technologies, such as:
(i) Relation Networks;
(ii) Bayesian/Probabilistic Network;
(iii) Deep Networks;
(iv) Output Debouncing Filters;

The deployment of such a system may include completion of two main phases, including:
(i) a system learning phase, which includes learning: (a) shopping basket/cart models, (b) reference actions/behaviors database, and (c) environmental statistics; and
(ii) a system runtime phase, which includes performing (a) scene actions monitoring, and (b) operations sequence collaborative support. During the operations sequence, collaborative support during which the system monitors the self-checkout process when a shopper interacts with the interactive user interface **2306** (e.g., scanning items). Depending on the interaction, the system may continue monitoring the shopper performing a checkout process at the checkout station using the sensing modules and having the sensing parameters **2302** feed into the probabilistic reasoning framework **2304** and/or continue with the probabilistic reasoning framework **2304** while the shopper is performing a self-checkout.

### FEATURES

One embodiment of a retail store self-checkout area may include a scanner configured to enable a shopper to scan items being purchased. A bagging area may be positioned at the scanner. A top-down facing camera positioned and oriented to image a shopping cart or basket at the self-checkout area and to generate image signals of the shopping cart or basket. A projector may be configured to project dynamically alterable illumination signals onto a surface visible to the shopper when at the self-checkout area to provide visual guidance information to the shopper.

The self-checkout area may further include a processor configured to receive the image signals from the camera, process the image signals to determine whether the shopping cart or basket of the shopper is properly positioned and oriented at the self-checkout area, and responsive to determining that the shopping cart or basket is not properly positioned at the self-checkout area, cause the projector to change an illumination signal from a first illumination state to a second illumination state to notify the shopper to reposition or reorient the shopping cart or basket. The first illumination state may include a first color and the second illumination state may include a second color.

The processor may further (i) identify an action indicative of an error or misbehavior by the shopper, and responsive to identifying an action indicative of an error or misbehavior, (ii) communicate a control signal to the projector to alter the illumination signal from the first illumination state to a third illumination state. The self-checkout area may further include an audible device configured to output audible signals. The processor may further be configured to generate and communicate audible data to the audible device in response to determining that (i) the shopping cart or basket is not properly positioned and oriented at the self-checkout area or (ii) the shopper made an error or performed an action that appears to be misbehavior.

One embodiment of the self-checkout area may include an electronic display configured to output visible signals. The processor may further be configured to generate and communicate visible data to the electronic display in response to determining that (i) the shopping cart or basket is not properly positioned and oriented at the self-checkout area or (ii) the shopper made an error or performed an action that appears to be misbehavior.

The illumination signals may form at least one elongated virtual lane line substantially parallel with a side wall that at least in part defines the bagging area and/or supports the scanner. The camera and projector may be supported by a structure of the self-checkout area and positioned above an area adjacent to the self-checkout area at which the shopper is to place the shopping cart such that the illumination signals generated by the projector define a virtual lane.

The self-checkout area may further include a processor configured to determine different states of a checkout process performed by shoppers at the self-checkout area, and communicate control signals that cause the projector to alter illumination states of the illumination signals, thereby causing the visual signals to be altered to guide the shopper in performing a self-checkout. The different states of the checkout process may include at least two of the following: (i) waiting for a customer; (ii) a customer placing a shopping cart or basket with one or more items at the self-checkout area; (iii) scanning items using the scanner and placing the scanned items into the bagging area; (iv) enabling the shopper to pay for the scanned item; (v) notifying the customer to remove the items from the bagging area; (vi) completing the self-checkout without detecting an error or misbehavior; and (vii) detecting an error or misbehavior and providing visual feedback via the projector.

One embodiment of a method of managing a retail store self-checkout area may include receiving image signals from a top-down facing camera. The image signals may be processed to determine whether the shopping cart or basket of the shopper is properly positioned and oriented at the self-checkout area. Responsive to determining that the shopping cart or basket is not properly positioned at the self-checkout area, a control signal may be communicated to the projector to change an illumination signal from a first illumination state to a second illumination state to notify the shopper at the self-checkout area to reposition or reorient the shopping cart or basket.

Communicating the control signal to the projector to change from the first illumination state to the second illumination state may include communicating a control signal to the projector to cause the projector to change the illumination signal from a first color to a second color. The process may further identify an action indicative of an error or misbehavior, and responsive to identifying an action indicative of an error or misbehavior, communicate a second control signal to the projector to alter the illumination signal from the first illumination state to a third illumination state.

An audible signal may be generated in response to determining that (i) the shopping cart or basket is not properly positioned and oriented at the self-checkout area or (ii) the shopper made an error or performed an action determined to be misbehavior. Communicating the control signal to the projector may include communicating the control signal to cause the projector to generate at least one elongated virtual lane line substantially parallel with a side wall that at least in part defines a bagging area and/or supports a scanner.

The camera and projector may be supported by a structure of the self-checkout area and positioned above an area adjacent to the self-checkout area at which the shopper is to place the shopping cart such that the illumination signals generated by the projector define a virtual lane. A determination of different states of a checkout process performed by shoppers at the self-checkout area may be performed, and different control signals may be communicated based on the determined state of the checkout process to the projector to alter illumination states of the illumination signals, thereby causing the visual signals to be altered to guide the shopper in performing a self-checkout.

The projector may alter the illumination states based on the different states of the checkout process, where the different states of the checkout process may include at least two of the following: (i) waiting for a customer; (ii) a customer placing a shopping cart or basket with one or more items at the self-checkout area; (iii) scanning items using the scanner and placing the scanned items into the bagging area; (iv) enabling the shopper to pay for the scanned item; (v) notifying the customer to remove the items from the bagging area; (vi) completing the self-checkout without detecting an error or misbehavior; and (vii) detecting an error or misbehavior and providing visual feedback via the projector. A cart orientation estimation module may be executed to identify features of the shopping cart to determine position and orientation thereof.

One embodiment of a method of managing a retail store self-checkout area may include providing a scanner configured to enable a shopper to scan items being purchased. A bagging area positioned at the scanner may be provided. A top-down facing camera may be positioned and oriented to image a shopping cart or basket at the self-checkout area and to generate image signals of the shopping cart or basket. A projector may be positioned and configured to project dynamically alterable illumination signals onto a surface visible to the shopper when at the self-checkout area to provide visual guidance information to the shopper. In an embodiment, wherein positioning the projector includes positioning the projector to be a top-down projector, and the projector may be oriented to project at least one line onto a floor and in parallel to a structure of the bagging area.

The foregoing method descriptions and the process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be rearranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of a preferred embodiment for implementing the invention, and the scope of the invention should not necessarily be limited by this description. The scope of the present invention is instead defined by the following claims.

The following items are also disclosed herein:
1. A retail store self-checkout station, comprising:
   a scanner configured to enable a shopper to scan machine-readable indicia on items being purchased;
   a camera positioned and oriented (i) to capture images of an area in which a shopping cart or shopping basket at the self-checkout station is to be positioned by the shopper during self-checkout, and (ii) to generate image signals of a self-checkout area at the self-checkout station; and
   a processor in communication with the camera and scanner, the processor configured to:
      process a captured image of the self-checkout area to determine a status classification including one of the following:
         (i) No Cart: a shopping cart or shopping basket is not in the self-checkout area;
         (ii) Empty: a shopping cart or shopping basket in the self-checkout area is empty;
         (iii) Not Empty: a shopping cart or shopping basket in the self-checkout area currently includes an item for purchase; and
         (iv) Occluded: an occlusion of a storage space of the shopping cart or shopping basket exists for the camera;
      in response to determining the status classification, communicate a notification indicative of the status classification to the shopper.
2. The self-checkout station according to item 1, wherein the processor, in processing the captured image, is further configured to:
   identify, using artificial intelligence, that a shopping cart or shopping basket is in the self-checkout area;
   responsive to identifying that a shopping cart or shopping basket is in the self-checkout area, determine whether an occlusion of a storage space defined by either the shopping cart or shopping basket exists from the captured image by determining whether a wall of the shopping cart or shopping basket is obstructing visibility of the camera into at least a part of storage space;
   responsive to determining that an occlusion does not exist, determine, based on the captured image, whether the shopping cart or shopping basket in the self-checkout area is empty or not empty; and
   generate the status classification of the captured image based on the determinations as to whether or not:
      (i) a shopping cart or shopping basket is in the self-checkout area,
      (ii) an occlusion of the shopping cart or basket exists for the camera, or
      (iii) the shopping cart or shopping basket is empty.
3. The self-checkout station according to item 1 or 2, wherein the processor, in communicating a notification to the shopper, includes communicating an audible notification to the shopper indicative of the status classification.
4. The self-checkout station according to any of items 1-3, wherein the processor is further configured to:
   analyze a sequence of captured images inclusive of the shopper while scanning items at the self-checkout station;
   identify an action indicative of an error or misbehavior by the shopper; and
   responsive to identifying an action indicative of an error or misbehavior, generate a signal to notify the shopper and/or personnel at the retail store that an identification of a potential error or misbehavior by the shopper has been made.
5. The self-checkout station according to item 4, wherein the processor, in identifying an action indicative of an error or misbehavior, is further configured to:
   identify and track hands of the shopper in the sequence of images to determine motions of the hands of the shopper;
   identify primitive motions of the shopper based on the motion of the hands of the shopper;
   determine, using a visual scan analysis, that the primitive motions of the shopper are indicative of a potential error or misbehavior; and
   communicate a notification signal to notify the shopper and/or personnel at the retail store that an identification of the potential error or misbehavior of the shopper has been made.
6. The self-checkout station according to item 5, further comprising:
   a data repository configured to store reference model motions of hands performing errors and/or misbehaviors; and
   wherein the processor is further configured to:
      identify, using a trained neural network, potential errors or misbehaviors, from the primitive motions of the shopper from the sequence of images; and
      responsive to identifying that the motions of the shopper are indicative of an error or misbehavior, generating the signal to notify the shopper and/or personnel at the retail store that an identification of a potential error or misbehavior by the shopper has been made.
7. The self-checkout station according to any of items 1-6, wherein the processor, in processing the captured image, is configured to render a 3D image from 2D images of the shopping cart or shopping basket to determine whether an occlusion of the storage space of the shopping cart or shopping basket exists for the camera.
8. The self-checkout station according to any of items 1-7, further comprising:
   a database including shopping cart and shopping basket model information that describes physical attributes of the shopping cart and shopping basket at different angles; and
   wherein the processor, in determining whether a shopping cart or shopping basket is in the self-checkout area, the processor being configured to:
      access the database inclusive of the shopping cart and shopping basket model information; and
      identify, using the shopping cart or shopping basket model information, whether a shopping cart or shopping basket is captured in the image signals.
9. The self-checkout station according to any of items 1-8, wherein the camera is an overhead, non-orthogonal camera.
10. The self-checkout station according to any of items 1-9, wherein the processor, in determining that the status classification is Occluded, is further configured to:
   divide an image of the basket of the shopping cart into a visible region and an occluded region;
   determine whether the occluded region is due to a side wall of the basket of the shopping cart blocking a space in which items are placed in the basket of the shopping cart;
   perform a small blob analysis to identify items in the space that items are visible via any openings defined by the side wall of the basket of the shopping cart;
   form a blob inclusive of the small blobs to determine that an item is contained within the basket of the shopping cart; and
   in response to determining that an item is contained in the basket of the shopping cart based on the formed blob, setting the status classification to Not Empty.
11. A method of managing a retail store self-checkout station, comprising:
   capturing overhead images of a shopping cart or shopping basket at the self-checkout station;
   generating image signals inclusive of the shopping cart or shopping basket from the captured images;
   determining, by a processor in processing the image signals, whether the shopping cart or basket is empty, not empty, or occluded;
   setting, by the processor, a status classification in response to determining that the shopping cart or shopping basket is empty, not empty, or occluded; and
   communicating, by the processor, a notification indicative of the status classification to the shopper and/or retail store personnel.
12. The method according to item 11, wherein capturing overhead images includes capturing non-orthogonal images of an area at which the shopping cart or shopping basket are to be placed by the shopper in performing a self-checkout.
13. The method of managing the retail store self-checkout area according to any of items 11-12, further comprising:
   tracking, by the processor, motion of hands of the shopper captured in the image signals;
   determining, by the processor, whether the shopper is potentially conducting a fraud, shoplifting, or making a mistake, based on the movement of the hands of the shopper;
   responsive to determining that the shopper is potentially conducting a fraud, shoplifting, or making a mistake, setting a second status classification indicative of a potential fraud, shoplifting, or mistake; and
   communicating a notification indicative of the second status classification to the shopper and/or retail store personnel.
14. The method according to any of items 11-13, further comprising:
   determining, by the processor, whether a machine-readable indicia that is scanned is associated with the item that the shopper is scanning as captured in the image signals;
   responsive to determining that the item being scanned is associated with or not associated with the machine-readable indicia scanned by the shopper, setting, by the processor, a third status classification; and
   communicating, by the processor, a notification to the shopper and/or retail store personnel.
15. The method according to item 14, wherein determining whether a machine-readable indicia that is scanned is associated with the item that the shopper is scanning includes identifying the item, by the processor, based on shape, color, and/or weight of the item.
16. The method according to any of items 11-15, further comprising:
   in response to determining that an occlusion of the shopping cart or shopping basket exists, determining whether an item is visible via spaces defined by a wall of the shopping cart or shopping basket; and
   in response to determining that an item is visible via the spaces defined by the wall of the shopping cart or shopping basket, setting the status classification to not empty.
17. The method according to item 16, wherein determining that an occlusion of the shopping cart or shopping basket exists, rendering a 3D image of the shopping cart using 2D images to determine a wall of the shopping cart or shopping basket is obstructing the camera from viewing the at least a portion of storage space of a basket of the shopping cart or shopping basket.
18. The method according to item 16 or 17, wherein determining whether an item is visible via spaces defined by a wall of the shopping cart or shopping basket includes applying a size-based content classification process relative to the size of the spaces defined by the wall of the shopping cart or shopping basket.
19. The method according to any of items 11-18, wherein determining whether the shopping cart or shopping basket is empty includes utilizing a trained neural network to identify position and orientation of the shopping cart or shopping basket in the images.
20. The method according to any of items 11-19, further comprising preventing the shopper from tendering payment at the self-checkout station in response to determining that the basket is not empty or an occlusion of the basket from the camera exists.

## Claims

1. A retail store self-checkout station, comprising:
a scanner configured to enable a shopper to scan machine-readable indicia on items being purchased;
a camera positioned and oriented (i) to capture images of an area in which a shopping cart or shopping basket at the self-checkout station is to be positioned by the shopper during self-checkout, and (ii) to generate image signals of a self-checkout area at the self-checkout station, wherein the camera is preferably an overhead, non-orthogonal camera; and
a processor in communication with the camera and scanner, the processor configured to:
process a captured image of the self-checkout area to determine a status classification including one of the following:
(i) No Cart: a shopping cart or shopping basket is not in the self-checkout area;
(ii) Empty: a shopping cart or shopping basket in the self-checkout area is empty;
(iii) Not Empty: a shopping cart or shopping basket in the self-checkout area currently includes an item for purchase; and
(iv) Occluded: an occlusion of a storage space of the shopping cart or shopping basket exists for the camera;
in response to determining the status classification, communicate a notification indicative of the status classification to the shopper.

2. The self-checkout station according to claim 1, wherein the processor, in processing the captured image, is further configured to:
identify, using artificial intelligence, that a shopping cart or shopping basket is in the self-checkout area;
responsive to identifying that a shopping cart or shopping basket is in the self-checkout area, determine whether an occlusion of a storage space defined by either the shopping cart or shopping basket exists from the captured image by determining whether a wall of the shopping cart or shopping basket is obstructing visibility of the camera into at least a part of storage space;
responsive to determining that an occlusion does not exist, determine, based on the captured image, whether the shopping cart or shopping basket in the self-checkout area is empty or not empty; and
generate the status classification of the captured image based on the determinations as to whether or not:
(i) a shopping cart or shopping basket is in the self-checkout area,
(ii) an occlusion of the shopping cart or basket exists for the camera, or
(iii) the shopping cart or shopping basket is empty.

3. The self-checkout station according to claim 1 or 2, wherein the processor is further configured to:
analyze a sequence of captured images inclusive of the shopper while scanning items at the self-checkout station;
identify an action indicative of an error or misbehavior by the shopper; and
responsive to identifying an action indicative of an error or misbehavior, generate a signal to notify the shopper and/or personnel at the retail store that an identification of a potential error or misbehavior by the shopper has been made.

4. The self-checkout station according to claim 3, wherein the processor, in identifying an action indicative of an error or misbehavior, is further configured to:
identify and track hands of the shopper in the sequence of images to determine motions of the hands of the shopper;
identify primitive motions of the shopper based on the motion of the hands of the shopper;
determine, using a visual scan analysis, that the primitive motions of the shopper are indicative of a potential error or misbehavior; and
communicate a notification signal to notify the shopper and/or personnel at the retail store that an identification of the potential error or misbehavior of the shopper has been made.

5. The self-checkout station according to claim 4, further comprising:
a data repository configured to store reference model motions of hands performing errors and/or misbehaviors; and
wherein the processor is further configured to:
identify, using a trained neural network, potential errors or misbehaviors, from the primitive motions of the shopper from the sequence of images; and responsive to identifying that the motions of the shopper are indicative of an error or misbehavior, generating the signal to notify the shopper and/or personnel at the retail store that an identification of a potential error or misbehavior by the shopper has been made.

6. The self-checkout station according to any of claims 1-5, wherein the processor, in processing the captured image, is configured to render a 3D image from 2D images of the shopping cart or shopping basket to determine whether an occlusion of the storage space of the shopping cart or shopping basket exists for the camera.

7. The self-checkout station according to any of claims 1-6, further comprising:
a database including shopping cart and shopping basket model information that describes physical attributes of the shopping cart and shopping basket at different angles; and
wherein the processor, in determining whether a shopping cart or shopping basket is in the self-checkout area, is configured to:
access the database inclusive of the shopping cart and shopping basket model information; and
identify, using the shopping cart or shopping basket model information, whether a shopping cart or shopping basket is captured in the image signals.

8. The self-checkout station according to any of claims 1-7, wherein the processor, in determining that the status classification is Occluded, is further configured to:
divide an image of the basket of the shopping cart into a visible region and an occluded region;
determine whether the occluded region is due to a side wall of the basket of the shopping cart blocking a space in which items are placed in the basket of the shopping cart;
perform a small blob analysis to identify items in the space that items are visible via any openings defined by the side wall of the basket of the shopping cart;
form a blob inclusive of the small blobs to determine that an item is contained within the basket of the shopping cart; and
in response to determining that an item is contained in the basket of the shopping cart based on the formed blob, setting the status classification to Not Empty.

9. A method of managing a retail store self-checkout station, comprising:
capturing overhead images of a shopping cart or shopping basket at the self-checkout station;
generating image signals inclusive of the shopping cart or shopping basket from the captured images;
determining, by a processor in processing the image signals, whether the shopping cart or basket is empty, not empty, or occluded;
setting, by the processor, a status classification in response to determining that the shopping cart or shopping basket is empty, not empty, or occluded; and communicating, by the processor, a notification indicative of the status classification to the shopper and/or retail store personnel.

10. The method according to claim 9, wherein capturing overhead images includes capturing non-orthogonal images of an area at which the shopping cart or shopping basket are to be placed by the shopper in performing a self-checkout.

11. The method of managing the retail store self-checkout area according to any of claims 9-10, further comprising:
tracking, by the processor, motion of hands of the shopper captured in the image signals;
determining, by the processor, whether the shopper is potentially conducting a fraud, shoplifting, or making a mistake, based on the movement of the hands of the shopper;
responsive to determining that the shopper is potentially conducting a fraud, shoplifting, or making a mistake, setting a second status classification indicative of a potential fraud, shoplifting, or mistake; and
communicating a notification indicative of the second status classification to the shopper and/or retail store personnel.

12. The method according to any of claims 9-11, further comprising:
determining, by the processor, whether a machine-readable indicia that is scanned is associated with the item that the shopper is scanning as captured in the image signals;
responsive to determining that the item being scanned is associated with or not associated with the machine-readable indicia scanned by the shopper, setting, by the processor, a third status classification; and
communicating, by the processor, a notification to the shopper and/or retail store personnel,
wherein preferably determining whether a machine-readable indicia that is scanned is associated with the item that the shopper is scanning includes identifying the item, by the processor, based on shape, color, and/or weight of the item.

13. The method according to any of claims 9-12, further comprising:
in response to determining that an occlusion of the shopping cart or shopping basket exists, determining whether an item is visible via spaces defined by a wall of the shopping cart or shopping basket, preferably by applying a size-based content classification process relative to the size of the spaces defined by the wall of the shopping cart or shopping basket; and
in response to determining that an item is visible via the spaces defined by the wall of the shopping cart or shopping basket, setting the status classification to not empty.

14. The method according to claim 13, wherein determining that an occlusion of the shopping cart or shopping basket exists, rendering a 3D image of the shopping cart using 2D images to determine a wall of the shopping cart or shopping basket is obstructing the camera from viewing the at least a portion of storage space of a basket of the shopping cart or shopping basket.

15. The method according to any of claims 9-14, wherein determining whether the shopping cart or shopping basket is empty includes utilizing a trained neural network to identify position and orientation of the shopping cart or shopping basket in the images.
